# EUROPEAN PATENT APPLICATION

(11) **EP 4 549 200 A1**
(43) Date of publication of application: **07.05.2025**
(21) Application number: 23831330.8
(22) Date of filing: 24.06.2023
(51) Int. Cl.: B60K 1/04, A01B 69/00, B25J 19/00, B62D 49/00, G06Q 50/02

(54) **ENERGY ASSISTANCE SYSTEM FOR AGRICULTURAL MACHINERY, ENERGY ASSISTANCE METHOD FOR AGRICULTURAL MACHINERY, AND AGRICULTURAL MACHINERY**

(30) Priority: 30.06.2022 JP 2022105614; 30.06.2022 JP 2022105615; 30.06.2022 JP 2022105616; 30.06.2022 JP 2022105617
(71) Applicant: Kubota Corporation, Osaka 556-8601 (JP)
(72) Inventor: KINUGAWA Ryosuke, Sakai-shi, Osaka 590-0908 (JP); IKEDA Ryo, Sakai-shi, Osaka 590-0908 (JP); MIURA Keisuke, Sakai-shi, Osaka 590-0908 (JP); ISHIHARA Kenji, Sakai-shi, Osaka 590-0908 (JP)
(74) Representative: Cabinet Beau de Loménie
(86) International application number: PCT/JP2023/023440
(87) International publication number: WO 2024/004888

(57) **Abstract**

An agricultural machine can smoothly continue agricultural work in a farm field. An energy support system for an agricultural machine to and from which a package body charged with energy is attachable and detachable and which is driven by the energy charged in the package body, the energy support system including: a management device that computes an energy consumption of the agricultural machine in a case where the agricultural machine performs an agricultural work and computes a number of package bodies required for covering the energy consumption based on the energy consumption.

## Description

### TECHNICAL FIELD

The present invention relates to, for example, an energy support system for an agricultural machine, an energy support method for an agricultural machine, and an agricultural machine.

### BACKGROUND ART

Hitherto, an agricultural machine of Patent Literature 1 is known as an agricultural machine loaded with a battery. The agricultural machine of Patent Literature 1 can travel by an electric motor driven by electric power of the battery.

### CITATION LIST

### PATENT LITERATURE

Patent Literature 1: JP 2022-60664 A

### SUMMARY OF INVENTION

The agricultural machine as described in Patent Literature 1 has attracted attention as an agricultural machine excellent in environmental properties because the agricultural machine does not emit exhaust gas as compared with an agricultural machine that travels by a diesel engine. However, the agricultural machine of Patent Literature 1 has a problem that it is difficult to travel for a long time since the battery supplies energy for traveling. In particular, in a case of performing agricultural work by using the agricultural machine, the agricultural machine cannot be sufficiently driven to perform the work.

In addition, in a case where the agricultural machine performs the agricultural work for a long time, it is necessary to charge the energy with the battery in the middle of the agricultural work, and there is a problem that efficiency of the entire agricultural work deteriorates when it takes time to charge the energy.

In addition, in a case where the agricultural machine performs the agricultural work for a long time, it is necessary to charge the energy with the battery in the middle of the agricultural work, and there is a problem that it is necessary to move the agricultural machine to a location away from a farm field or a predetermined location such as a charging station in order to charge the energy.

Therefore, an object of the present invention is to provide an energy support system for an agricultural machine and an energy support method for the agricultural machine that enable the agricultural machine to smoothly continue agricultural work in a farm field.

Further, an object of the present invention is to provide an energy support system for an agricultural machine that enables the agricultural machine to smoothly deliver a package body required for agricultural work according to the agricultural work in a farm field.

Further, an object of the present invention is to provide an energy support system for an agricultural machine and an agricultural machine that enable quick energy replenishment for the agricultural machine and improvement in efficiency of agricultural work.

Further, an object of the present invention is to provide an agricultural machine that can be easily charged with energy without moving to a station or the like for energy charging.

### SOLUTION TO PROBLEM

The technical means of the present invention for solving the technical problem is characterized by the following points.

An energy support system for an agricultural machine to and from which a package body charged with energy is attachable and detachable and which is driven by the energy charged in the package body, the energy support system including: a management device that computes an energy consumption of the agricultural machine in a case where the agricultural machine performs an agricultural work and computes a number of package bodies required for covering the energy consumption based on the energy consumption.

The management device transmits the number of package bodies and farm field information regarding a farm field that is a delivery destination of the package body to any one of a transport vehicle that transports the package body, a terminal of a driver who drives the transport vehicle, and a terminal of a delivery center for delivering the package body.

The management device computes the energy consumption of the agricultural machine in a case where the agricultural machine performs the agricultural work based on a content of the agricultural work performed in the farm field.

The management device computes the energy consumption of the agricultural machine in a case where the agricultural machine performs the agricultural work for each of a plurality of farm fields based on a content of the agricultural work of each of the plurality of farm fields, and computes the number of package bodies for each of the plurality of farm fields based on the computed energy consumption for each of the plurality of farm fields.

The management device searches for a farm field where the agricultural work is performed in a predetermined period among the plurality of farm fields, and extracts the farm field extracted by the search and the number of package bodies used in the extracted farm field.

The management device transmits the package body for each searched farm field and information regarding each farm field to any one of a transport vehicle that transports the package body, a terminal of a driver who drives the transport vehicle, and a terminal of a delivery center for delivering the package body.

The management device issues a delivery instruction for the package body to any one of a transport vehicle that transports the package body, a terminal of a driver who drives the transport vehicle, and a terminal of a delivery center for delivering the package body.

When the energy of the mounted package body becomes equal to or less than a threshold, the agricultural machine travels toward the package body delivered to an inside of the farm field or a vicinity of the farm field.

The management device issues a collection instruction for the package body to any one of the transport vehicle that transports the package body, the terminal of the driver who drives the transport vehicle, and the terminal of the delivery center for delivering the package body.

An energy support method for an agricultural machine to which a package body charged with energy is detachably attached, the energy support method including: computing an energy consumption of the agricultural machine in a case where the agricultural machine performs agricultural work before the agricultural machine performs the agricultural work in a farm field; and computing a number of package bodies required for covering the energy consumption based on the energy consumption.

An energy support system for an agricultural machine to and from which a package body charged with energy is attachable and detachable and which is driven by the energy charged in the package body, the energy support system including: a management device that acquires any one of a work plan of agricultural work performed by the agricultural machine in a farm field or a request from the agricultural machine, and issues a command for delivering the package body toward the farm field to any one of a transport vehicle, a terminal of a driver who drives the transport vehicle, and a terminal of a delivery center for delivering the package body according to a delivery plan set based on the work plan or the request.

The management device acquires any one of the work plan of the agricultural work performed by the agricultural machine in the farm field and the request from the agricultural machine, and issues a command for collecting the package body to any one of the transport vehicle, the terminal of the driver who drives the transport vehicle, and the terminal of the delivery center for delivering the package body according to a collection plan set based on the work plan or the request.

The agricultural machine includes an operation switch that makes at least one of a request for delivery of the package body and a request for collection of the package body.

The agricultural machine includes a communication device that makes at least any one of a request for delivery of the package body and a request for collection of the package body when the energy of the package body mounted on the agricultural machine becomes equal to or less than a threshold.

The transport vehicle moves toward the farm field by automated driving in a case where the command for delivering the package body is received.

The transport vehicle moves toward the farm field by automated driving in a case where the command for collecting the package body is received.

The management device computes degradation of the package body from a delivery history of a plurality of package bodies stored in a delivery source, and selects the package body to be delivered from among the plurality of package bodies based on the computed degradation of the package body.

The management device determines a delivery fee based on a size of the package body to be delivered.

An energy support system for an agricultural machine is an energy support system for an agricultural machine to and from which a package body charged with energy is attachable and detachable and which is driven by the energy charged in the package body, the energy support system including a management device that provides a guidance for delivering another package body different from the package body mounted on the agricultural machine to a relay point through which the agricultural machine passes in the middle of agricultural work in order to continue the agricultural work of the agricultural machine in a farm field.

The management device creates, as the relay point, a place where a material with which the agricultural machine is to be replenished is placed, and provides a guidance for installing the another package body at the relay point.

The agricultural machine moves toward the relay point when an amount of the material loaded on the agricultural machine in the agricultural work becomes equal to or less than a threshold.

When the amount of the material loaded on the agricultural machine becomes equal to or less than the threshold in the agricultural work, a transport vehicle loaded with the material and the another package body at the relay point is moved from the relay point toward the agricultural machine.

When the transport vehicle reaches the agricultural machine, an alert for prompting replacement of the package body is made in the transport vehicle or the agricultural machine.

The management device creates, as the relay point, the place where the transport vehicle that receives a harvested product harvested by the agricultural machine stands by, and provides a guidance for installing the another package body at the relay point.

The agricultural machine moves toward the relay point when an amount of the harvested product harvested by the agricultural machine in the agricultural work becomes equal to or more than a threshold.

When the amount of the harvested product harvested by the agricultural machine in the agricultural work is equal to or more than the threshold and the another battery is loaded on the transport vehicle, the transport vehicle is moved from the relay point toward the agricultural machine.

When the transport vehicle reaches the agricultural machine, an alert for prompting replacement of the package body is made in the transport vehicle or the agricultural machine.

The agricultural machine includes an alert device, and when the agricultural machine reaches the relay point, the alert device makes an alert for prompting replacement of the package body.

An agricultural machine includes a vehicle body to and from which a package body charged with energy is attachable and detachable, a prime mover that is driven by the energy charged in the package body, and a working device, in which in a case where it is necessary to replenish the working device with a material or it is necessary to discharge a harvested product harvested by the working device, the vehicle body moves to a relay point where another package body different from the package body mounted on the agricultural machine is placed.

An agricultural machine includes a prime mover, a plurality of package bodies charged with energy for driving at least one of a working device and the prime mover, a vehicle body loaded with at least the plurality of package bodies, and a control device that controls traveling of the vehicle body, in which the control device controls traveling for moving the vehicle body toward another vehicle body in a case where there is at least one package body having the energy equal to or more than a threshold among the plurality of package bodies.

An agricultural machine includes a prime mover, a plurality of package bodies charged with energy for driving at least one of a working device and the prime mover, a vehicle body loaded with at least the plurality of package bodies, and a communication device, in which the communication device transmits a signal indicating that the package body can be delivered to another vehicle body in a case where there is at least one package body having the energy equal to or more than a threshold.

The agricultural machine includes the communication device that transmits a signal indicating that the package body can be delivered to another vehicle body in a case where there is at least one package body having the energy equal to or more than the threshold.

In a case where the communication device receives a request for bringing the package body from the another vehicle body, the control device controls traveling for moving toward the another vehicle body.

The control device extracts a charged package body which is a package body having the energy equal to or more than the threshold among the plurality of package bodies, and selects the charged package body that can be delivered to another vehicle body among the plurality of charged package bodies in a case where there are a plurality of extracted charged package bodies.

The agricultural machine includes a control device that extracts a charged package body which is a package body having the energy equal to or more than the threshold among the plurality of package bodies, and selects the charged package body that can be delivered to another vehicle body among the plurality of charged package bodies in a case where there are a plurality of extracted charged package bodies.

The control device stops the vehicle body in a case where a distance between the vehicle body and the another vehicle body becomes equal to or smaller than a threshold.

### ADVANTAGEOUS EFFECTS OF INVENTION

According to the present invention, it is possible to enable the agricultural machine to smoothly continue agricultural work in a farm field

According to the present invention, the agricultural machine can smoothly deliver a package body required for agricultural work according to the agricultural work in a farm field.

According to the present invention, it is possible to quickly replenish the agricultural machine with energy, thereby improving efficiency of agricultural work.

According to the present invention, it is possible to easily perform energy charging without moving to a station or the like for energy charging.

### BRIEF DESCRIPTION OF DRAWINGS

Fig. 1 is an overall diagram showing an energy support system for an agricultural machine according to a first embodiment.
Fig. 2 is a functional block diagram of an electronic device of the agricultural machine.
Fig. 3 is a perspective view of a lifting device included in the agricultural machine.
Fig. 4 is a perspective view of a battery mounting portion included in the agricultural machine, and a view for explaining an operation when replacing a battery.
Fig. 5 is a view showing an example of a screen displayed on an external terminal.
Fig. 6A is a diagram for obtaining a contour H10 (farm field map MP2) of a farm field from a traveling track K1.
Fig. 6B is a diagram for obtaining the contour H10 (farm field map MP2) of the farm field from inflection points of the traveling track K1.
Fig. 6C is a diagram for obtaining the contour H10 (farm field map MP2) from a switch operation during traveling.
Fig. 7A is a view showing an example of a screen M11.
Fig. 7B is a view showing an example of a screen M12.
Fig. 8A is a diagram showing creation of a unit work section A3 in a work area A2.
Fig. 8B is a diagram showing a unit work section A3 different from that in Fig. 8A.
Fig. 8C is an explanatory view for explaining creation of a scheduled travel route L1.
Fig. 9 is a view showing an example of a screen M1.
Fig. 10 is a view showing a state in which a tractor is moved from a barn to the farm field and returns from the farm field to the barn.
Fig. 11A is a view showing a state in which a first package body is delivered to a farm field H1.
Fig. 11B is a view showing a state in which a second package body 6B is collected.
Fig. 12 is a diagram showing an example of a work plan.
Fig. 13 is a diagram showing a relationship between agricultural work and an energy consumption amount per unit area.
Fig. 14 is a diagram showing a model number of a package body and energy information for each machine.
Fig. 15A is a diagram showing an operation from planning of work to computation of the number of package bodies.
Fig. 15B is a diagram showing an operation of delivering the first package body in a delivery plan.
Fig. 16 is a diagram showing an example of the delivery plan.
Fig. 17 is a diagram showing an operation of collecting the second package body in a collection plan.
Fig. 18 is a diagram showing an example of the collection plan.
Fig. 19 is a diagram showing an example of a delivery history.
Fig. 20 is a diagram showing a relationship between a remaining level of energy, a charge amount, and the number of times of charging, and a coefficient.
Fig. 21 is a diagram showing an example of a degradation degree of the package body.
Fig. 22 is a diagram showing a relationship between the model number of the package body and a delivery fee.
Fig. 23 is a view showing an example of a screen M15.
Fig. 24 is a view showing an example of a screen at the time of setting a relay point.
Fig. 25 is a diagram showing a relationship between a side indicating a contour of the farm field and the relay point.
Fig. 26A is a screen displaying a message for placing the first package body at the relay point at the time of delivery.
Fig. 26B is a view showing a message for collecting the second package body placed at the relay point at the time of collection.
Fig. 27A is a view showing a farm field map on a screen M31 of an agricultural terminal.
Fig. 27B is a view showing the farm field map including a replenishment position PH on the screen M31 of the agricultural terminal.
Fig. 28A is a view showing a state in which a package body delivery message is added to the farm field map in which the relay point and the replenishment position PH are set.
Fig. 28B is a view showing a state in which a package body collection message is added to the farm field map in which the relay point and the replenishment position PH are set.
Fig. 29 is a view showing a state in which the tractor moves toward the replenishment position.
Fig. 30 is a view showing a state in which the first package body and a material are delivered to the farm field H1.
Fig. 31 is a view showing an operation of a transport vehicle T loaded with the first package body and the material.
Fig. 32 is a view showing a state in which the transport vehicle moves from a relay point A5 toward the tractor.
Fig. 33 is a view showing a state in which the first package body and an empty container are delivered to the farm field H1**.**
Fig. 34 is a diagram showing an operation of the transport vehicle T loaded with the first package body and the material, and the empty container.
Fig. 35 is an overall diagram showing an energy support system for an agricultural machine according to a second embodiment.
Fig. 36 is a functional block diagram of an electronic device of the agricultural machine.
Fig. 37 illustrates a state in which a first tractor and a second tractor perform work in a farm field H1**.**
Fig. 38 illustrates an operation when the second tractor delivers a charging package body to the first tractor.
Fig. 39 is a diagram showing an example of a charging package.
Fig. 40 is a view showing an example of displaying a charging package.
Fig. 41 is a view showing a state in which the second tractor delivers the charging package body to the first tractor in the farm field or a road (farm road).
Fig. 42 is an overall view of the tractor.

### DESCRIPTION OF EMBODIMENTS

### [First Embodiment]

Hereinafter, each embodiment of the present invention will be described with reference to the drawings.

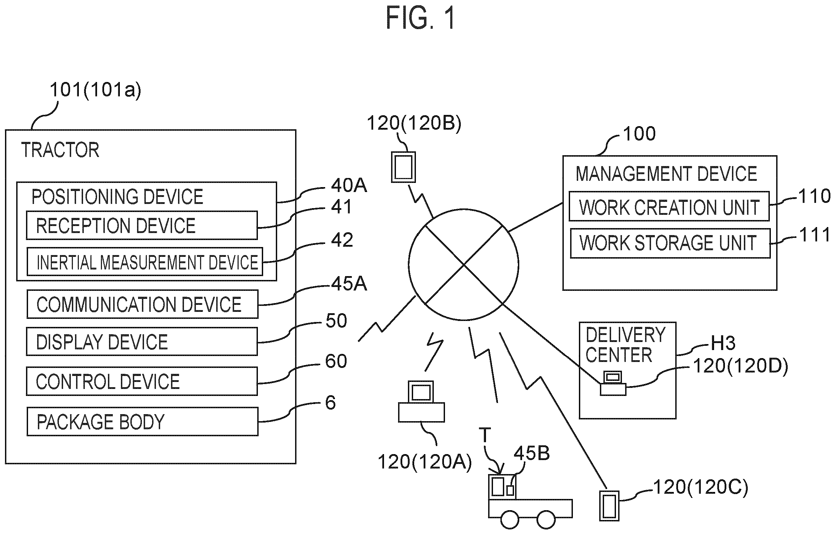

Fig. 1 shows an energy support system for an agricultural machine. The energy support system for an agricultural machine includes a management device 100. The management device 100 is an installation type computer such as a server, a portable computer such as a smartphone, a tablet, or a notebook computer, or the like. An agricultural machine 101 is a tractor, a combine harvester, a rice transplanter, or the like, an impulse, or the like. In the present embodiment, a description will be given on the assumption that the agricultural machine 101 is a tractor, and the management device 100 is a server.

### <Agricultural Machine>

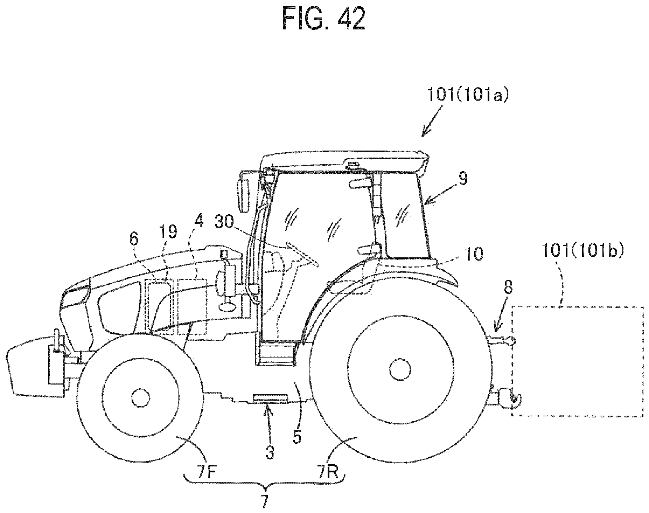

Fig. 42 is a side view showing a tractor 101a which is one of the agricultural machines 101 and an implement 101b mounted on the tractor 101a. Hereinafter, a description will be given on the assumption that a front side of a driver seated on a driver seat 10 of the tractor 101a is a front side, a rear side of the driver is a rear side, a left side of the driver is a left side, and a right side of the driver is a right side. A horizontal direction orthogonal to a front-rear direction of the tractor 101a will be described as a vehicle body width direction.

As shown in Fig. 42, the tractor 101a (agricultural machine 101a) includes a vehicle body 3, a prime mover 4, a transmission device 5, and a package body 6. The vehicle body 3 includes a traveling device 7 and can travel. The traveling device 7 is a device including front wheels 7F and rear wheels 7R. The front wheel 7F may be a tire type or a crawler type. The rear wheel 7R may also be a tire type or a crawler type. The prime mover 4 is an electric motor. The prime mover 4 is driven by electric energy (energy source) supplied from the package body 6. The transmission device 5 can switch a propulsive force of the traveling device 7 by shifting, and can switch between forward movement and backward movement of the traveling device 7. The driver seat 10 is provided at a rear portion of the vehicle body 3. The driver seat 10 is installed in a cabin 9 provided in the vehicle body 3. A steering wheel 30 is provided at the front of the driver seat 10.

The package body 6 is a package charged with energy, and is, for example, a battery charged with electric energy, a hydrogen tank charged with hydrogen, a liquified petroleum gas (LPG) tank, or the like. In a case where the hydrogen tank is loaded, for example, a fuel cell that generates electric power with hydrogen and oxygen in the air is loaded on the tractor 101a, and hydrogen from the tank is supplied to the fuel cell, whereby the electric power generated by the fuel cell can be supplied to the prime mover 4 to drive the prime mover 4. In a case where the LPG tank is loaded, for example, a generator that generates electric power by a gas engine is loaded on the tractor 101a, and the gas from the tank is supplied to the gas engine, whereby the electric power can be supplied to the prime mover 4 to drive the prime mover 4. In the present embodiment, for convenience of explanation, it is assumed that the package body 6 is a battery, and the prime mover 4 is an electric motor driven by electric power of the battery.

The package body 6 is attachable and detachable to and from the vehicle body 3. For example, the prime mover 4 and the package body 6 are disposed at a front portion of the vehicle body 3, but the disposition and the like are not limited thereto.

In addition, a coupling portion configured by a three-point link mechanism or the like is provided at the rear portion of the vehicle body 3. The coupling portion is a lifting device 8 to and from which the working device (implement) 101b is attachable and detachable and which enables the working device (implement) 101b to travel. The vehicle body 3 can tow the implement 101b by coupling the implement 101b to the lifting device 8. Note that the coupling portion may be a towing device that does not lift and lower the implement 101b. The implement 101b is a tilling device for tilling, a ridging device for ridging, a planting device for planting crops, a fertilizer spreading device for spreading a fertilizer, a pesticide spreading device for spreading a pesticide, a harvesting device for harvesting, a mowing device for mowing grass or the like, a distributing device for distributing grass or the like, a grass gathering device for gathering grass or the like, and a shaping device for shaping grass or the like.

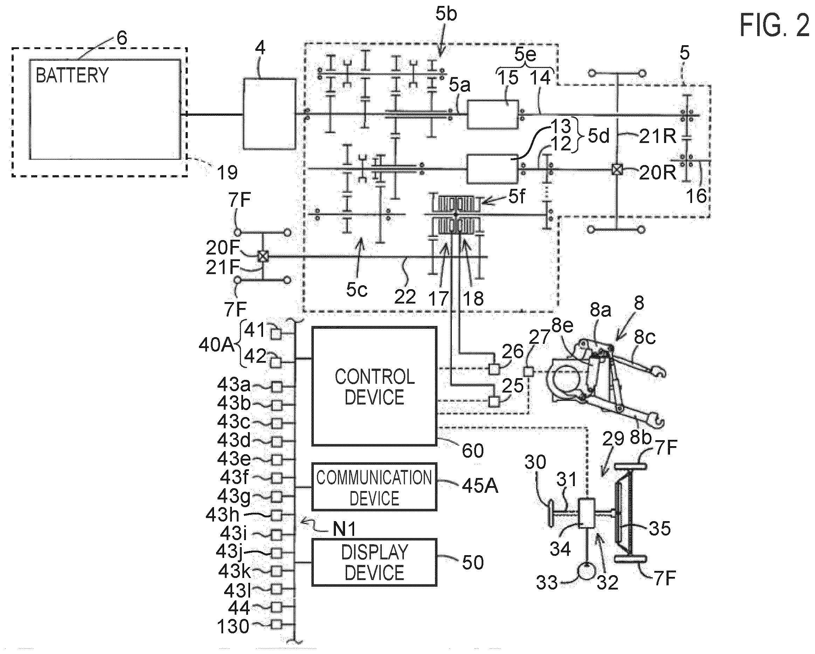

As shown in Fig. 2, the transmission device 5 receives power from the prime mover 4, and transmits power of a traveling system and power of a work system. The transmission device 5 includes a main shaft (propulsion shaft) 5a, a main transmission unit 5b, an auxiliary transmission unit 5c, a shuttle unit 5d, a PTO power transmission unit 5e, and a front transmission unit 5f. The propulsion shaft 5a is rotatably supported by a housing case (transmission case) of the transmission device 5, and the power from a crankshaft of the prime mover 4 is transmitted to the propulsion shaft 5a. The main transmission unit 5b includes a plurality of gears and a shifter that changes connection of the gears. The main transmission unit 5b changes and outputs (shifts) rotation input from the propulsion shaft 5a by appropriately changing connection (meshing) of the plurality of gears with the shifter.

Similarly to the main transmission unit 5b, the auxiliary transmission unit 5c includes a plurality of gears and a shifter that changes connection of the gears. The auxiliary transmission unit 5c changes and outputs (shifts) rotation input from the main transmission unit 5b by appropriately changing connection (meshing) of the plurality of gears with the shifter. The shuttle unit 5d includes a shuttle shaft 12 and a forward/backward switching unit 13**.** The power output from the auxiliary transmission unit 5c is transmitted to the shuttle shaft 12 via a gear or the like. The forward/backward switching unit 13 is configured by, for example, a hydraulic clutch or the like, and switches a rotation direction of the shuttle shaft 12, that is, forward movement and backward movement of the tractor 101a, by turning on and off the hydraulic clutch. The shuttle shaft 12 is connected to a rear wheel differential device 20R. The rear wheel differential device 20R rotatably supports a rear axle 21R to which the rear wheel 7R is attached.

The PTO power transmission unit 5e includes a PTO propulsion shaft 14 and a PTO clutch 15. The PTO propulsion shaft 14 is rotatably supported, and can transmit the power from the propulsion shaft 5a. The PTO propulsion shaft 14 is connected to a PTO shaft 16 via a gear or the like. The PTO clutch 15 is configured by, for example, a hydraulic clutch or the like, and is switched between a state of transmitting the power of the propulsion shaft 5a to the PTO propulsion shaft 14 and a state of not transmitting the power of the propulsion shaft 5a to the PTO propulsion shaft 14 by turning on and off the hydraulic clutch.

The front transmission unit 5f includes a first clutch 17 and a second clutch 18. The first clutch 17 and the second clutch 18 can transmit the power from the propulsion shaft 5a, and for example, the power of the shuttle 12 is transmitted via a gear and a transmission shaft. The power from the first clutch 17 and the second clutch 18 can be transmitted to a front axle 21F via a front transmission shaft 22. Specifically, the front transmission shaft 22 is connected to a front wheel differential device 20F, and the front wheel differential device 20F rotatably supports the front axle 21F to which the front wheel 7F is attached.

The first clutch 17 and the second clutch 18 are configured by hydraulic clutches or the like. An oil passage is connected to the first clutch 17, and the oil passage is connected to a first operation valve 25 through which hydraulic oil discharged from a hydraulic pump is supplied. The first clutch 17 is switched between a connected state and a disconnected state depending on an opening degree of the first operation valve 25. An oil passage is connected to the second clutch 18, and a second operation valve 26 is connected to the oil passage. The second clutch 18 is switched between the connected state and the disconnected state depending on an opening degree of the second operation valve 26. The first operation valve 25 and the second operation valve 26 are, for example, solenoid valve equipped two-position switching valves, and are switched to the connected state or the disconnected state by exciting or demagnetizing a solenoid of the solenoid valve.

In a case where the first clutch 17 is in the disconnected state and the second clutch 18 is in the connected state, the power of the shuttle shaft 12 is transmitted to the front wheel 7F through the second clutch 18. As a result, the front wheels 7F and the rear wheels 7R are driven by the power to engage four-wheel drive (4WD), and rotational speeds of the front wheel 7F and the rear wheel 7R become substantially the same (4WD constant-speed state). On the other hand, in a case where the first clutch 17 is in the connected state and the second clutch 18 is in the disconnected state, the four-wheel drive is engaged, and the rotational speed of the front wheel 7F becomes higher than the rotational speed of the rear wheel 7R (4WD speed-up state). Further, in a case where the first clutch 17 and the second clutch 18 are in the disconnected state, the power of the shuttle shaft 12 is not transmitted to the front wheel 7F, and thus, two-wheel drive (2WD) in which the rear wheels 7R are driven by the power is engaged.

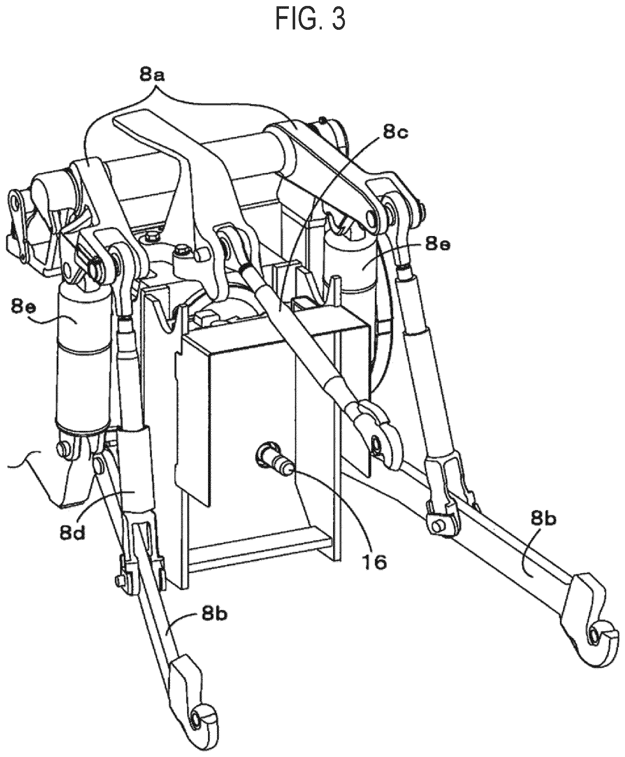

As shown in Figs. 2 and 3, the lifting device 8 includes a lift arm 8a, a lower link 8b, a top link 8c, a lift rod 8d, and a lift cylinder 8e. A front end portion of the lift arm 8a is swingably supported upward or downward on a rear upper portion of the case (transmission case) that houses the transmission device 5. The lift arm 8a swings (is lifted or lowered) by driving of the lift cylinder 8e. The lift cylinder 8e is configured by a hydraulic cylinder. The lift cylinder 8e is connected to a hydraulic pump via a control valve 27. The lift cylinder 8e is switched between the connected state and the disconnected state depending on an opening degree of the control valve 27. The control valve 27 is, for example, a solenoid valve equipped two-position switching valve, and is switched to the connected state or the disconnected state by exciting or demagnetizing a solenoid of the solenoid valve. When the control valve 27 is in the connected state, the lift cylinder 8e is driven (expanded and contracted) by the hydraulic pump, and when the control valve 27 is in the disconnected state, the driving of the lift cylinder 8e is restricted (locked) .

A front end portion of the lower link 8b is swingably supported upward or downward on a rear lower portion of the transmission device 5. A front end portion of the top link 8c is swingably supported upward or downward on a rear portion of the transmission device 5 above the lower link 8b. The lift rod 8d couples the lift arm 8a and the lower link 8b. The implement 101b is coupled to a rear portion of the lower link 8b and a rear portion of the top link 8c. When the lift cylinder 8e is driven (expanded and contracted), the lift arm 8a is lifted and lowered, and the lower link 8b coupled to the lift arm 8a via the lift rod 8d is lifted and lowered. As a result, the implement 101b swings (is lifted and lowered) upward or downward with a front portion of the lower link 8b as a fulcrum. When the driving of the lift cylinder 8e is restricted, the lifting and lowering of the implement 101b is also locked.

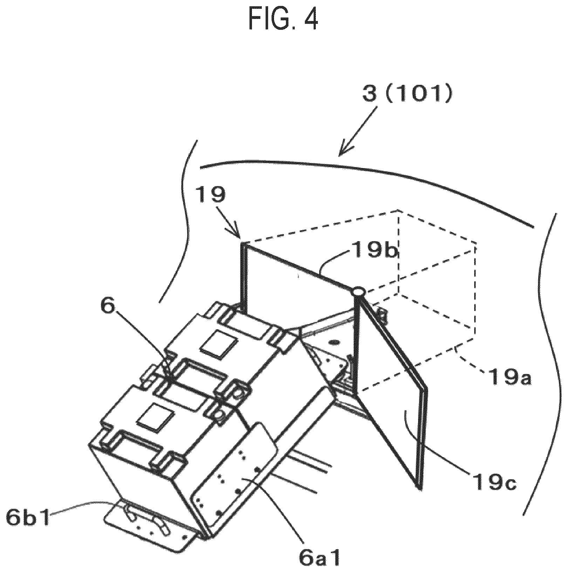

As shown in Fig. 4, the package body 6 includes a battery pack and an electric unit (a relay, a fuse, or the like) inside a substantially rectangular parallelepiped casing. The battery pack includes a plurality of battery modules. The battery module includes a plurality of cells. The package body 6 configured as described above is a battery capable of charging and discharging electric energy, specifically, a lithium ion battery. The package body 6 is held by a holder 6a1 from the outside of the casing, and a grip portion 6b1 is provided at a front side end portion of the holder 6a1. A mounting portion 19 of the vehicle body 3 includes a housing portion 19a which is a space capable of housing the entire package body 6, an opening 19b provided on a front side of the housing portion 19a in the vehicle width direction, and a flap type lid portion 19c capable of closing the opening 19b. Normally, in a state in which the package body 6 is housed in the housing portion 19a, the opening 19b is closed by the lid portion 19c, and the electric power can be supplied from the package body 6 to the tractor 101a.

In a case of replacing the package body 6, the opening 19b is exposed by opening the lid portion 19c. By pulling the holder 6a1 toward a front side while gripping the grip portion 6b1 of the package body 6 being mounted, the package body 6 is taken out from the housing portion 19a while being slid toward the front side in the vehicle width direction. A back side end portion of the new replacement package body 6 is inserted into the empty housing portion 19a through the opening 19b. Next, the holder 6a1 is pushed toward a back side while gripping the grip portion 6b1 of the new replacement package body 6, and the new replacement package body 6 is slid toward the back side in the vehicle width direction. Then, after the entire new replacement package body 6 is housed in the housing portion 19a, the opening 19b is closed by closing the lid portion 19c. As described above, the package body 6 is replaced. The configurations of the package body 6 and the mounting portion 19 are examples, and any configuration may be adopted as long as the package body 6 can be mounted on and separated from the mounting portion 19.

As shown in Fig. 2, the tractor 101a includes a steering device 29. The steering device 29 includes the steering wheel 30, a rotation shaft (steering shaft) 31 that rotates with the rotation of the steering wheel 30, and an assist mechanism (power steering mechanism) 32 that assists the steering of the steering wheel 30. The assist mechanism 32 includes a hydraulic pump 33, a control valve 34 to which hydraulic oil discharged from the hydraulic pump 33 is supplied, and a steering cylinder 35 operated by the control valve 34. The control valve 34 is a solenoid valve that operates based on a control signal. The control valve 34 is, for example, a three-position switching valve that can be switched by movement of a spool or the like. The control valve 34 can also be switched by steering of a steering shaft 31. The steering cylinder 35 is connected to an arm (knuckle arm) that changes an orientation of the front wheel 7F.

Therefore, when the steering wheel 30 is operated, a switching position and an opening degree of the control valve 34 are switched according to the steering wheel 30, and a steering direction of the front wheel 7F can be changed by expanding and contracting the steering cylinder 35 to the left or right according to the switching position and the opening degree of the control valve 34. Note that the steering device 29 described above is an example, and is not limited to the above-described configuration.

As shown in Fig. 2, the tractor 101a includes a positioning device 40A. The positioning device 40A can detect its own position (positioning information including latitude and longitude) by a satellite positioning system (positioning satellite) such as D-GPS, GPS, GLONASS, BeiDou, Galileo, or Michibiki. That is, the positioning device 40A receives a satellite signal (a position of the positioning satellite, a transmission time, correction information, or the like) transmitted from the positioning satellite, and detects a position (for example, latitude and longitude) based on the satellite signal. The positioning device 40A includes a reception device 41 and an inertial measurement unit (IMU) 42. The reception device 41 is a device that includes an antenna or the like and receives the satellite signal transmitted from the positioning satellite, and is attached to the vehicle body 3 separately from the inertial measurement unit 42. In the present embodiment, the reception device 41 is attached to the cabin 9 provided in the vehicle body 3. Note that an attachment location of the reception device 41 is not limited to that in the embodiment.

The inertial measurement unit 42 includes an acceleration sensor that detects an acceleration, a gyro sensor that detects an angular velocity, and the like. The inertial measurement unit 42 is provided below the vehicle body 3, for example, the driver seat 10, and can detect a roll angle, a pitch angle, a yaw angle, and the like of the vehicle body 3.

As shown in Fig. 2, the tractor 101a includes a communication device 45A. The communication device 45A is connected to the positioning device 40A, a control device 60, an operation member (a lever, a switch, a dial, or the like), and sensors via an in-vehicle communication network N1, and an electric signal is input to the communication device 45A. The communication device 45A can communicate with an external network (outside) different from the in-vehicle communication network N1**.** The communication device 45A can perform radio communication by, for example, wireless fidelity (Wi-Fi) (registered trademark) of the IEEE 802.11 series which is a communication standard, Bluetooth (registered trademark) low energy (BLE), low power wide area (LPWA), low-power wide-area network (LPWAN), or the like. Furthermore, the communication device 45A can perform radio communication by, for example, a mobile phone communication network, a data communication network, or the like. The communication device 45A transmits a vehicle body position (a position of the tractor 101a) detected by the positioning device 40A to the management device 100.

As shown in Fig. 2, the tractor 101a includes the control device 60. The control device 60 includes a computation unit (central processing unit (CPU) or the like), a storage unit (memory), and the like, and performs predetermined control based on a program stored in a storage unit. More specifically, the control device 60 controls the traveling system and the work system of the tractor 101a based on an operation signal when the operation member (the lever, the switch, the dial, or the like) installed around the driver seat 10 is operated, detection signals of various sensors loaded on the vehicle body 3, and the like.

In a case where a shuttle lever 43a for switching forward movement or backward movement of the vehicle body 3 is operated to switch to forward movement, the control device 60 switches the forward/backward switching unit 13 to forward movement to move the vehicle body 3 forward. In addition, when the shuttle lever 43a is operated to switch to backward movement, the control device 60 switches the forward/backward switching unit 13 to backward movement to move the vehicle body 3 backward.

The control device 60 starts the prime mover 4 through predetermined processing in a case where an ignition switch 43b is operated to be turned on, and stops the driving of the prime mover 4 in a case where the ignition switch 43b is operated to be turned off.

In a case where a PTO switch 43c is operated during the driving of the prime mover 4, the control device 60 switches a position of the PTO clutch 15 to any one of a neutral position, an ON position, and an OFF position to turn on and off the driving of the PTO shaft 16. In a case where a PTO shift lever 43d is operated, the control device 60 changes a rotation speed of the PTO shaft 16 (referred to as a PTO rotation speed) by switching a PTO shift gear embedded in the transmission device 5.

In a case where a shift changeover switch 43e is switched to automatic shift, the control device 60 automatically changes any one of the main transmission unit 5b and the auxiliary transmission unit 5c according to a state of the tractor 101a, and automatically changes a shift stage (shift level) of the transmission device 5 to a predetermined shift stage (shift level). In a case where the shift changeover switch 43e is switched to manual shift, the control device 60 automatically changes any one of the main transmission unit 5b and the auxiliary transmission unit 5c according to a shift stage (shift level) set by a shift lever 43f to change the shift stage of the transmission device 5.

In a case where an accelerator lever 43g is operated, the control device 60 changes a vehicle speed (speed) of the vehicle body 3 by changing a rotation speed of the prime mover 4 (referred to as a prime mover rotation speed) according to an operation amount of the accelerator lever 43g.

In a case where the hydraulic lever 43h is operated in a lifting direction (lifting side) during the driving of the prime mover 4, the control device 60 controls the control valve 27 to expand the lift cylinder 8e and lift a rear end portion (an end portion adjacent to the implement 101b) of the lift arm 8a. In a case where the hydraulic lever 43h is operated in a lowering direction (lowering side) during the driving of the prime mover 4, the control device 60 controls the control valve 27 to contract the lift cylinder 8e and lower the rear end portion (the end portion adjacent to the implement 101b) of the lift arm 8a.

The control device 60 is set to an automated driving mode in a case where a driving changeover switch 43i is operated to be turned on, and is set to a manual driving mode in a case where the driving changeover switch 43i is operated to be turned off. In a case where the automated driving mode is set, the control device 60 performs automated driving of the tractor 101a. Under the automated driving situation, the control device 60 automatically changes a rotation angle of the steering shaft (rotation shaft) 31 based on a deviation between the detected the vehicle body position and a set scheduled travel route. In addition, the control device 60 automatically changes the shift stage of the transmission device 5, the rotation speed of the prime mover 4, and the like such that the current vehicle speed matches a vehicle speed corresponding to the scheduled travel route. As a result, the vehicle body 3 can perform automated driving on the scheduled travel route.

The control device 60 acquires a remaining level of the package body 6 being mounted based on a potential detected by the measurement sensor 43j of the package body 6, the rotation speed of the prime mover 4, the vehicle speed of the vehicle body 3, and the like. The control device 60 controls the communication device 45A to transmit the battery monitoring cancellation signal to the management device 100 in a case where the control device 60 determines that the package body 6 being mounted needs to be replaced based on the acquired remaining level of the package body 6. Further, in a case where the control device 60 determines that the mounted package body 6 has been replaced with the replacement package body 6 based on the potential detected by the measurement sensor 43j of the package body 6, the control device 60 controls the communication device 45A to transmit a battery monitoring signal to the management device 100. A specific aspect of the transmission of the battery monitoring signal and the battery monitoring cancellation signal based on the measurement sensor 43j is described below.

As shown in Fig. 2, the tractor 101a includes a display device 50. The display device 50 includes a CPU, an electric/electronic circuit, a panel (a liquid crystal panel, a touch panel, and other panels), and the like.

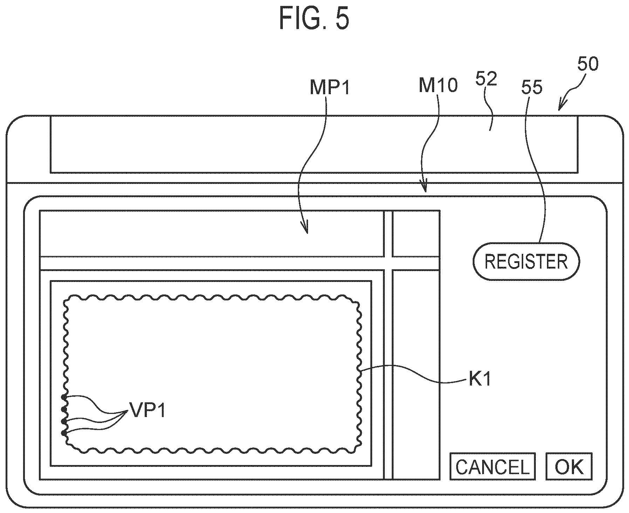

The display device 50 registers a contour of a predetermined farm field, for example, a position corresponding to the contour of the predetermined farm field. As shown in Fig. 5, when a predetermined operation is performed on the display device 50, a screen M10 is displayed on a panel of the display device 50.

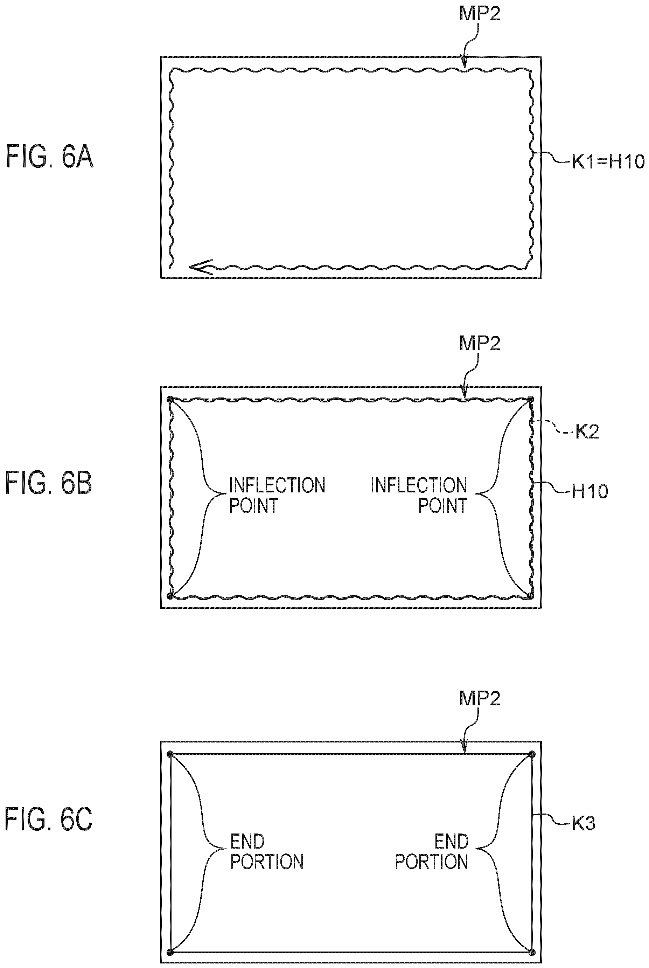

The screen M10 displays a map MP1 including a farm field, a vehicle body position VP1 of a tractor 1, farm field identification information such as a farm field name and a farm field management number. In addition to image data indicating the farm field, position information such as latitude and longitude is associated with the map MP1. When the tractor 1 enters the farm field and goes around in the farm field, the screen M10 displays the current vehicle body position VP1 detected by the positioning device 40A when the tractor 1 goes around. When the tractor 1 finishes going around in the farm field and a register button 55 displayed on the screen M10 is selected, the display device 50 sets a traveling track K1 obtained by a plurality of vehicle body positions when the tractor 1 goes around as the contour (outer shape) H10 of the farm field, and registers a farm field map MP2 represented by the contour H10 together with the farm field identification information as shown in Fig. 6A.

As shown in Fig. 6B, the display device 50 may compute inflection points from the traveling track indicated by the vehicle body positions VP1 and register a contour K2 connecting the inflection points as the contour H10 (farm field map MP2) of the farm field, or the driver or the like may designate end portions of the farm field by a switch or the like provided in the tractor 1 when the tractor 1 goes around, and register a contour K3 connecting the designated end portions as the contour H10 (field map MP2) as shown in Fig. 6C. The farm field registration method described above is an example and is not limited. The contour of the farm field, that is, the farm field map MP2 may be data indicated by a position (latitude and longitude), data indicated by coordinates (X axis and Y axis) system, or data indicated by other expressions.

The display device 50 stores the farm field map MP2 indicating the contour (outer shape). That is, the display device 50 stores the farm field map MP2 and data indicating the contour of the farm field (data representing the predetermined farm field).

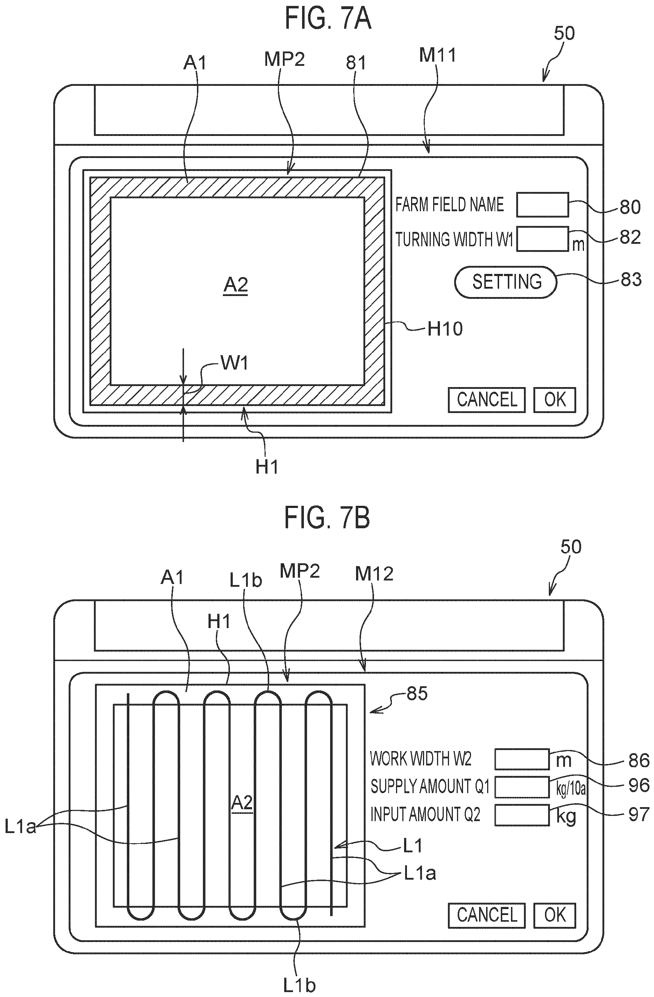

The display device 50 sets a work area A2. As shown in Fig. 7A, when a worker (driver) performs a predetermined operation on the display device, the display device 50 displays a screen M11. The screen M11 includes a farm field input section 80 and a farm field display section 81. The farm field identification information such as the farm field name and the farm field management number can be input to the farm field input section 80. The farm field display section 81 displays the farm field map MP2 indicating the predetermined farm field corresponding to the farm field identification information input to the farm field input section 80.

When a turning setting button 83 is selected after a turning width W1 is input to a turning width input section 82 on the screen M11, the display device 50 displays the work area A2 excluding a turning area A1 on the farm field map MP2 displayed on the farm field display section 81. For example, the display device 50 sets, as the work area A2, an area surrounded by a contour H11 formed by offsetting the contour H10 of the farm field map MP2 inward by the turning width W1. The work area A2 may be set in the farm field map MP2 by designating a position of a contour of the work area A2 on the farm field map MP2 displayed in the farm field display section 81 by using a pointer or the like on the screen M11.

The display device 50 stores data of the farm field map MP2 in which the work area A2 is set and data (farm field map) indicating a position of the work area A2. In addition, the display device 50 transmits the farm field map to the management device 100 via the communication device 45A. When the farm field map is received, the management device 100 stores the received farm field map.

The display device 50 can create a travel route (scheduled travel route) L1 of the traveling vehicle body 3 on the farm field map MP2. As shown in Fig. 7B, when the worker (driver) performs a predetermined operation on the display device, the display device 50 displays a screen M12. On the screen M12, it is possible to set the scheduled travel route L1 at least in the work area A2 in the farm field. The screen M12 includes a route display section 85 in which the scheduled travel route L1 is displayed, and a width input section 86. A work width W2 of a working device 2 is a width (work execution width) in which the working device 2 performs work on a ground such as the farm field, and is a spreading width for supplying a material in a case of the working device 2 that spreads the material in the farm field. For example, in a case where the working device 2 is a fertilizing device, a fertilization width is the work width W2. In a case where the working device 2 is a chemical spreading device, a chemical spreading width is the work width W2. In a case where the working device 2 is a seedling transplanting device, a planting width at which a seedling can be planted in the farm field in one work is the work width W2. In a case where the working device 2 is a seeding device, a seeding width is the work width W2. The ground work refers to agricultural work performed on the farm field and crops planted in the farm field, and examples thereof include planting of seedlings, watering, spreading of chemicals, spreading of fertilizers (fertilization), spreading of seeds (seeding), compaction, covering, ridge formation, tilling, and groove forming.

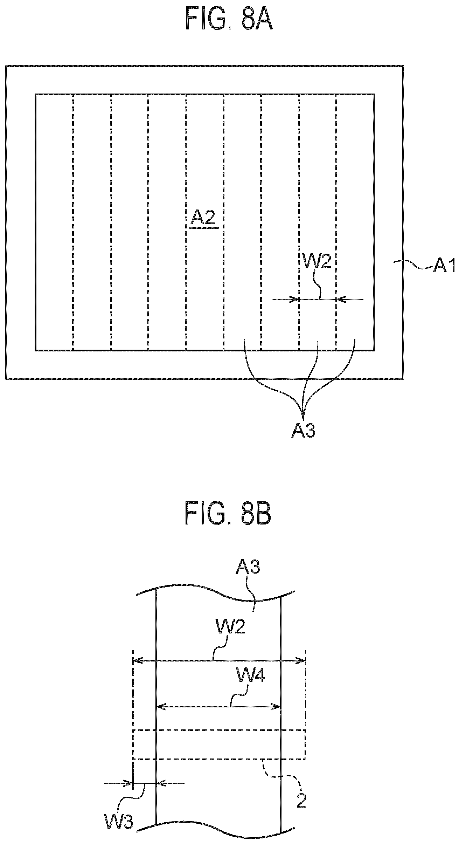

When the work width W2 is acquired, the display device 50 divides the work area A2 in a longitudinal direction or a lateral direction with the work width W2 as shown in Fig. 8A, thereby creating a plurality of unit work sections A3 in the work area A2 where the work is performed by the working device 2. That is, the display device 50 creates the plurality of unit work sections A3 having the same width as the work width W2 in the work area A2. As shown in Fig. 8B, the display device 50 may create the plurality of unit work sections A3 having a width W4 obtained by excluding an overlap width W3 from the work width W2 in the work area A2. The overlap width W3 can be input on the screen M12. That is, in a case where the traveling vehicle body 3 to which the working device 2 is coupled is caused to travel, the display device 50 sets, as the unit work section A3, a region of a minimum unit in which the work is performed on the farm field by the working device 2.

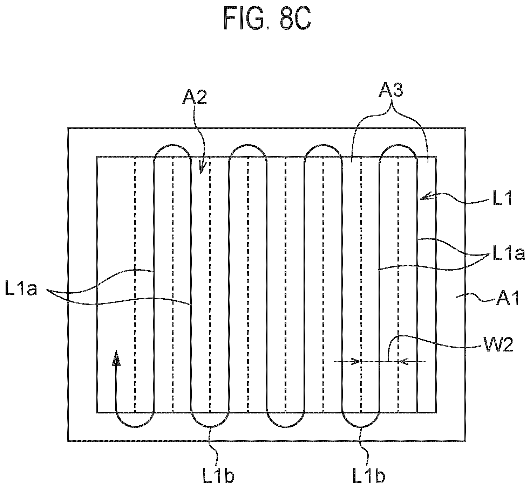

As shown in Fig. 8C, the display device 50 creates a straight part (straight route) L1a through which the traveling vehicle body 3 goes straight for each unit work section A3 of the farm field map MP2. That is, the display device 50 creates, for example, the linear straight route L1a connecting both end portions of the unit work section A3 in a longitudinal direction at a central portion of the unit work section A3 in a width direction. The display device 50 creates a turning part (turning route) L1b in which the traveling vehicle body 3 turns in the turning area A1.

The display device 50 can associate the scheduled travel route L1 with the vehicle speed (movement speed) of the tractor 1 (traveling vehicle body 3). For example, it is assumed that a vehicle speed input section to which the vehicle speed is input is provided on the screen M12, and the vehicle speed is input to the vehicle speed input section. The display device 50 associates the straight route L1a with the vehicle speed input to the vehicle speed input section. The display device 50 stores the scheduled travel route L1 (the straight route L1a and the turning route L1b).

### <Contents of Agricultural Work (Work Plan)>

As shown in Fig. 1, the energy support system for an agricultural machine includes the management device 100. The management device 100 can be connected to the communication device 45A or an external terminal 120. The external terminal 120 is a terminal such as a portable computer (notebook computer), a fixed computer (personal computer), a personal digital assistant (PDA), a smartphone, or a tablet. The management device 100 performs a predetermined operation in response to a predetermined command from the external terminal 120. Hereinafter, for convenience of explanation, the external terminal 120 owned or operated by a manager who manages agriculture is referred to as a manager terminal 120A, and the external terminal 120 owned or operated by the worker who performs the agricultural work or the like is referred to as a worker terminal 120B.

The management device 100 includes a work creation unit 110 and a work storage unit 111. The work creation unit 110 is configured by an electronic/electric circuit provided in the management device 100, a program stored in a computation unit such as a CPU of the management device 100, or the like. The work storage unit 111 is configured by a nonvolatile memory or the like.

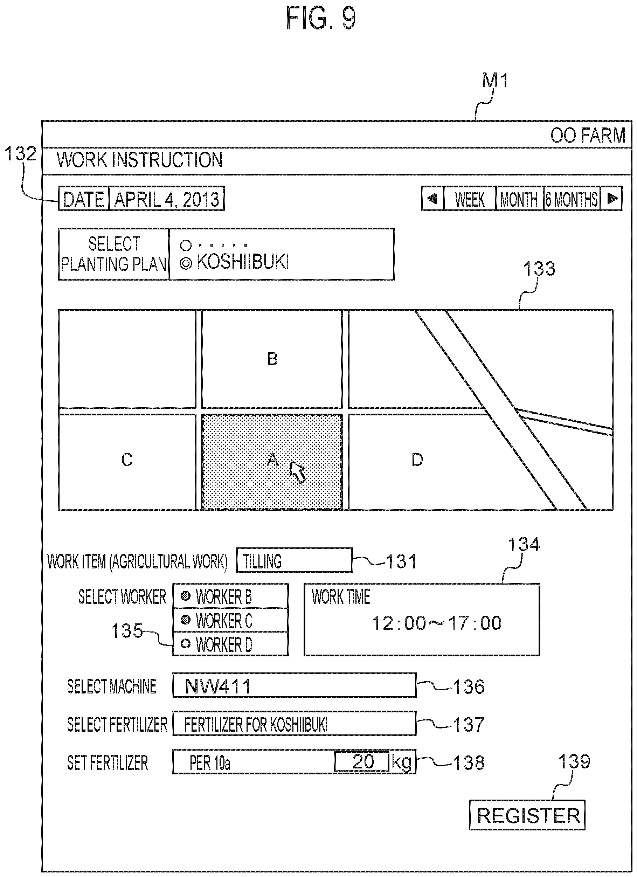

The work creation unit 110 creates a content (work plan) of the agricultural work including at least the work, a scheduled execution date, and the farm field. When the manager terminal 120A is connected to the management device 100 and issues a predetermined command to the management device 100, the work creation unit 110 causes the manager terminal 120A to display the screen M1 as shown in Fig. 9. The screen M1 includes a work setting section 131, a date setting section 132, a farm field setting section 133, and a time setting section 134. The work setting section 131 is a section for setting the work, and a predetermined work can be set by selecting the predetermined work from works registered in advance. The work is work performed for cultivating crops, and examples of the work include bed soil making, ridge coating, tilling, seeding, rice planting, ploughing and irrigating, grooving, weeding, top dressing, and harvesting.

The date setting section 132 is a section for setting the scheduled execution date on which the work set in the work setting section 131 is performed, and can set the scheduled execution date by inputting a year, month, day, and the like. The farm field setting section 133 is a section for setting the farm field in which the work is to be performed, and for example, a plurality of farm fields are displayed on the farm field map registered in advance, and a predetermined farm field selected from the plurality of farm fields is set as the farm field in which the work is to be performed. The time setting section 134 is a section for setting a time zone for performing the work, and the time zone can be set by inputting a time.

The screen M1 may include a worker setting section 135 for setting the worker who performs the work, a machine setting section 136 for setting a machine that performs the work, a spread object setting section 137 for setting a name of a spread object in a case where the work is work of spreading the spread object, and a spread amount setting section 138 for setting a spread amount of the spread object. Machine information such as a type and a model number of the agricultural machine can be input to the machine setting section 136.

When a register button 139 displayed on the screen M1 is selected, the work creation unit 110 creates information (contents) set by the work setting section 131, the date setting section 132, the farm field setting section 133, the time setting section 134, the worker setting section 135, the machine setting section 136, the spread object setting section 137, and the spread amount setting section 138 as contents of the agricultural work (work plan). The work storage unit 111 stores the work plan (the work, the scheduled execution date, the farm field, the time zone, the worker, the machine, the name of the spread object, and the spread amount) created by the work creation unit 110. The work plan in the above-described embodiment is an example and is not limited. For example, the work is not limited to work of rice cultivation, and may include work of dry field cultivation, and may include other works. In this manner, the content (work plan) of the agricultural work created by the work creation unit 110 of the management device 100 is displayed on the manager terminal 120A and the worker terminal 120B, and can be confirmed by the manager, the worker, and the like.

### <Agricultural Work>

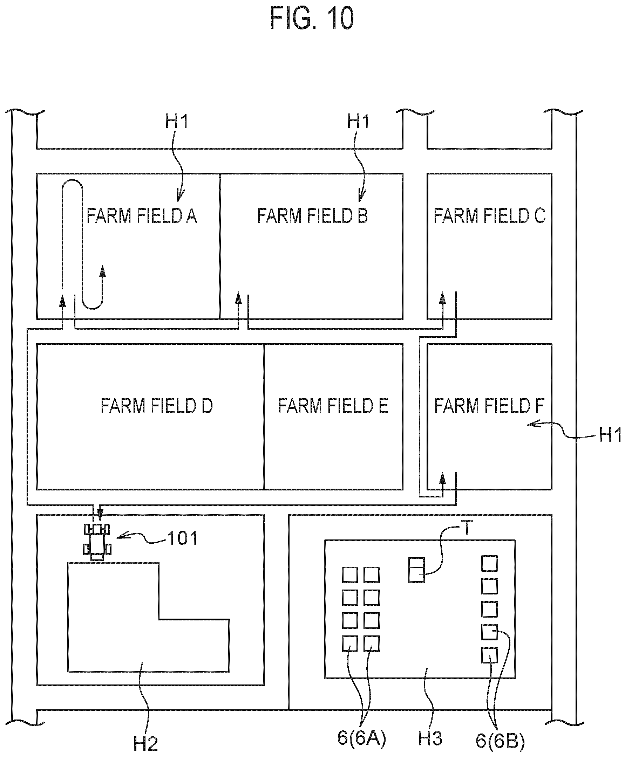

In a case of performing the agricultural work, the worker or the like refers to the work plan displayed on the worker terminal 120B. As shown in Fig. 10, the worker or the like manually moves the tractor 101a from a storage place H2 such as a barn toward a farm field H1 (for example, a farm field A) indicated in the work plan. When the tractor 101a arrives at the farm field H1 (farm field A), the tractor 101a travels in the farm field H1 (farm field A) to perform the agricultural work. When the agricultural work ends in the farm field H1 (farm field A), the worker moves the tractor 101a to a farm field H1 (for example, a farm field B) different from the farm field H1 (farm field A) in which the agricultural work has ended, and after arriving at the farm field H1 (farm field B), the worker causes the tractor 101a to travel in the farm field H1 (farm field B) to perform the agricultural work. In this manner, in a case of performing the agricultural work, the tractor 101a can perform the agricultural work in each farm field H1 by sequentially moving to the farm fields H1 (the farm field A, the farm field B, ..., and a farm field F) according to the work plan. When the agricultural work in the farm field H1 indicated by a predetermined period (for example, one day) in the work plan ends, the worker moves the tractor 101a to the storage place H2 and stops the tractor 101a at the storage place H2. In the above-described embodiment, a case where the tractor 101a is moved from the storage place H2 to the farm field H1, moved between the farm fields H1, or returned from the farm field H1 to the storage place H2 by the manual driving has been exemplified. However, the movement of the tractor 101a may be the automated driving and is not limited. In addition, the automated driving and the manual driving may be combined in such a way that, for example, the automated driving is performed in the farm field H1, and the manual driving is performed in the farm field H1**.** Similarly to the scheduled travel route L1 in the farm field, in the automated driving of the tractor 101a, for example, a route (scheduled travel route) along which the tractor 101a moves during the automated driving is depicted in the farm field map indicating latitude, longitude, and the like, and the tractor 101a is caused to travel along the depicted route (scheduled travel route) under the control of the control device 60. In the automated driving described above, the movement along the scheduled travel route has been described as an example, but a direction of the automated driving is not limited thereto.

### <Computation of Energy Consumption/Computation of Number of Battery Packs>

For example, the management device 100 computes an energy consumption of the tractor 101a in a case where the tractor 101a performs the agricultural work before the tractor 101a performs the agricultural work in the farm field H1**.** The management device 100 computes the energy consumption of the tractor 101a based on the content of the agricultural work indicated in the work plan by referring to the work plan.

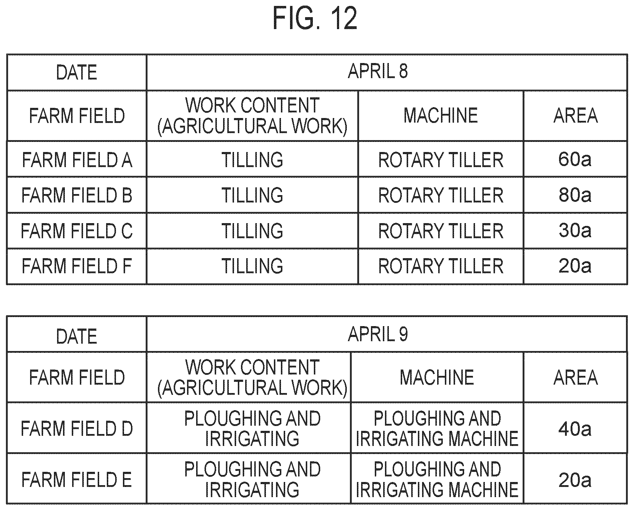

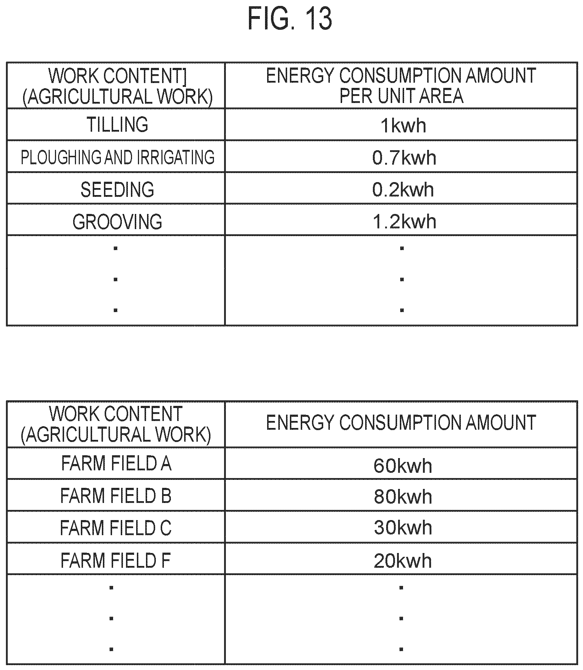

Fig. 12 illustrates an example of the work plan. As shown in Fig. 12, the management device 100 refers to, for example, the work plan of April 8. A plurality of farm fields H1 (the farm field A, the farm field B, a farm field C, and the farm field F) are shown in the work plan. The management device 100 computes the energy consumption of the tractor 101a for each of the plurality of farm fields H1 (the farm field A, the farm field B, the farm field C, and the farm field F) based on the content of the agricultural work in each of the farm fields H1 (the farm field A, the farm field B, the farm field C, and the farm field F). The management device 100 extracts the agricultural work (work content) of each of the plurality of farm fields H1 (the farm field A, the farm field B, the farm field C, and the farm field F), and computes the energy consumption (first energy consumption) for the agricultural work of the farm field H1 from the extracted agricultural work, an energy consumption amount per unit area in the agricultural work, and a farm field area registered in advance in the management device 100 as shown in Fig. 13. As shown in Fig. 12, for example, in the work plan of April 8, the work content is tilling, and an area of the farm field A is 60a. As shown in Fig. 13, the energy consumption amount per unit area is 1 kwh, and thus, the energy consumption amount in the farm field A is 60 kwh.

Further, the management device 100 computes a distance (a movement distance between the farm fields) for the tractor 101a traveling from the storage place H2 where the tractor 101a is stored, passing through each of the farm fields H1 (the farm field A, the farm field B, the farm field C, and the farm field F), and returning to the storage place H2, and computes an energy consumption (second energy consumption) for the movement of the tractor 101a. The total energy consumption obtained by adding the first energy consumption and the second energy consumption is set as an energy consumption required for the agricultural work.

In the above-described embodiment, the energy consumption is computed based on the agricultural work and the energy consumption amount per unit area, and in addition to this, the management device 100 may obtain the energy consumption by referring to the machine information (a model and model number of the tractor 101a) indicated in the work plan and multiplying the energy consumption amount by a coefficient determined according to the model and the model number.

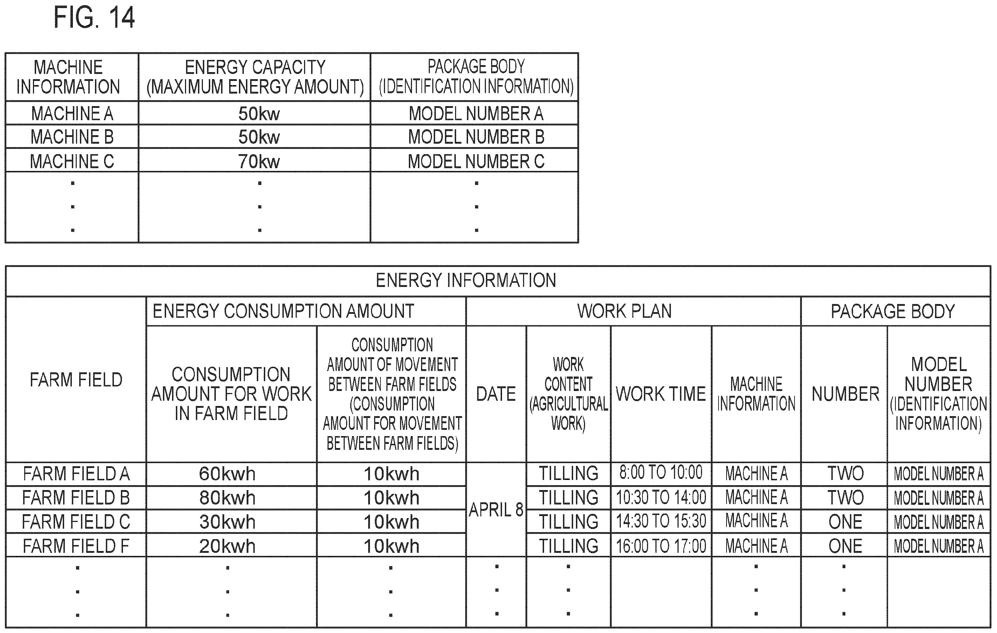

Next, when the energy consumption required for the agricultural work is obtained, the management device 100 computes the number of package bodies 6 required for covering the energy consumption. As shown in Fig. 14, the management device 100 refers to the machine information indicated in the work plan, specifies the package body 6 mounted on the tractor 101a based on the referred machine information, and extracts the maximum energy amount of the specified package body 6.

As shown in Fig. 14, the management device 100 specifies the package body 6 mounted on the tractor 101a by referring to a database of the machine information and identification information such as a model number for identifying the package body 6. As shown in Fig. 12, for example, in the work plan of April 8, since the machine used for the agricultural work in each of the plurality of farm fields H1 (the farm field A, the farm field B, the farm field C, and the farm field F) is a "machine A", the management device 100 specifies that the package body 6 mounted on the "machine A" is a "model number A" as shown in Fig. 14. The management device 100 computes the number of package bodies 6 by dividing the total energy consumption (an energy consumption obtained by adding the first energy consumption and the second energy consumption) of each of the plurality of farm fields H1 (the farm field A, the farm field B, the farm field C, and the farm field F) by the maximum energy amount of the "model number A", which is the package body 6 mounted on the "machine A", and rounding up the quotient. For example, since the energy consumption amount in the farm field A is 70 kwh and the work is performed by the tractor 101a loaded with the model number A in the farm field A, the management device 100 calculates that the number of package bodies 6 required for the agricultural work of the farm field A is two by dividing 70 kwh by 50 kwh which is an energy capacity of the model number A.

The management device 100 stores a date, the farm field H1, the agricultural work, a work time, the machine information, the number of package bodies, and the model number (identification information) of the package body as energy information. The energy information includes the work plan such as the date, the farm field H1, the agricultural work, the work time, and the machine information.

In the above-described embodiment, the number of package bodies 6 is obtained by dividing the total energy consumption in the farm field H1 by the maximum energy amount of the package body 6. However, a predetermined energy amount (an energy amount of 80% in a case where the maximum energy amount is expressed as 100%) may be used instead of the maximum energy amount of the package body 6. In this case, the number of package bodies 6 (rounding up of a decimal point) = the energy consumption in the farm field H1/the predetermined energy amount of the package body. For example, when applied to the farm field A on April 8 described above, the number of package bodies 6 in the farm field A is two according to "the energy consumption (70 kwh) in the farm field A/the predetermined energy amount of the package body (40 kwh: 80% of maximum energy of 50 kwh)".

### <Operation of Energy Support System>

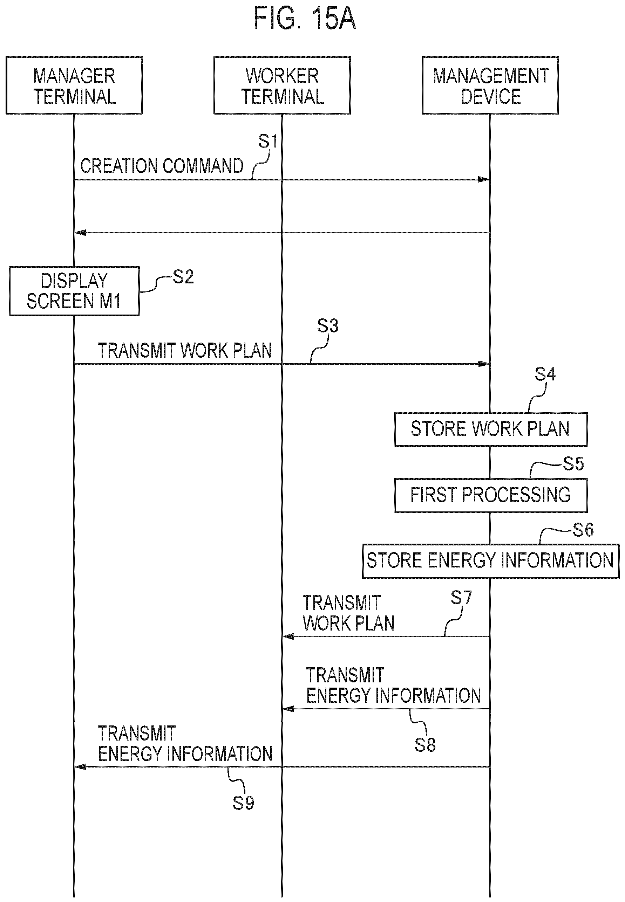

An operation of the energy support system for an agricultural machine will be described. As shown in Fig. 15A, when the manager terminal 120A is connected to the management device 100 and transmits a command for creating the work plan to the management device 100 (step S1), the management device 100 causes the manager terminal 120A to display the screen M1 (step S2). When the manager terminal 120A is operated and the work plan is transmitted to the management device 100 (step S3), the work plan is stored in the management device 100 (step S4). At least on the day before the date indicated in the work plan or before the date and time indicated in the work plan, the management device 100 executes processing (first processing) of obtaining the total energy consumption of the tractor 101a for each farm field H1 and obtaining the number of package bodies 6 from the total energy consumption (step S5). In the first processing, the management device 100 computes the total energy consumption when the tractor 101a performs the work in each farm field indicated in the work plan by referring to the work plan, and computes the number of package bodies from the maximum energy amount of the package body 6 loaded on the tractor 101a or the predetermined energy amount of the package body 6 from the computed total energy consumption. That is, in the first processing, the management device 100 obtains the number of package bodies 6 by the above-described method. After the first processing, the management device 100 stores the energy information (the date, the farm field H1, the agricultural work, the machine information, the number of package bodies, and the identification information of the package body) (step S6).

In a case where there is a request for the work plan from the worker terminal 120B or the current date and time reaches a predetermined date and time, the management device 100 transmits the work plan to the worker terminal 120B (step S7). In a case where there is a request for the energy information from the worker terminal 120B, the management device 100 transmits the energy information to the worker terminal 120B (step S8). In a case where there is a request for the energy information from the manager terminal 120A, the management device 100 transmits the energy information to the manager terminal 120A (step S9).

As described above, before the tractor 101a performs the agricultural work, the worker or the manager can grasp the number of package bodies 6 required for the agricultural work in the farm field H1 where the tractor 101a performs the work.

### <Delivery/Collection of Package Body>

As described above, when the agricultural work is performed while the tractor 101a is traveling, the energy of the package body 6 is consumed. The energy support system for an agricultural machine supports delivery of the package body 6 to the farm field H1 and collection of the package body 6 placed in the farm field H1.

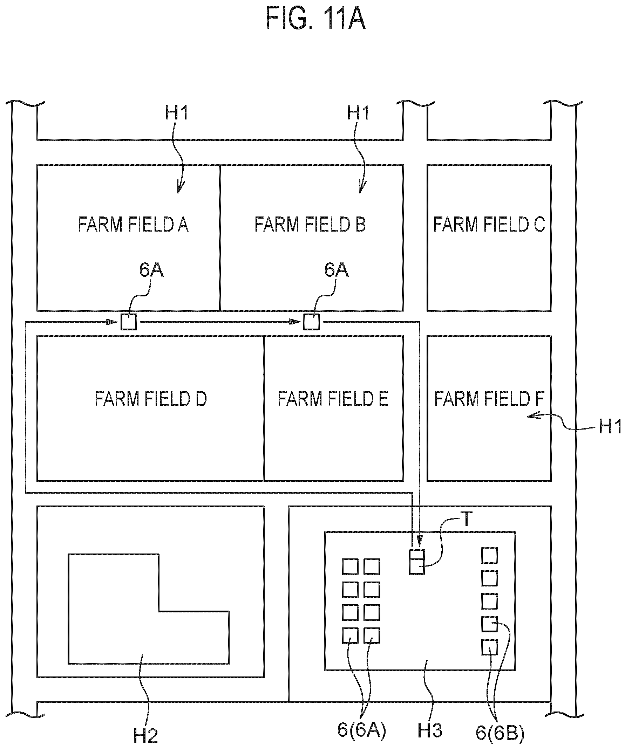

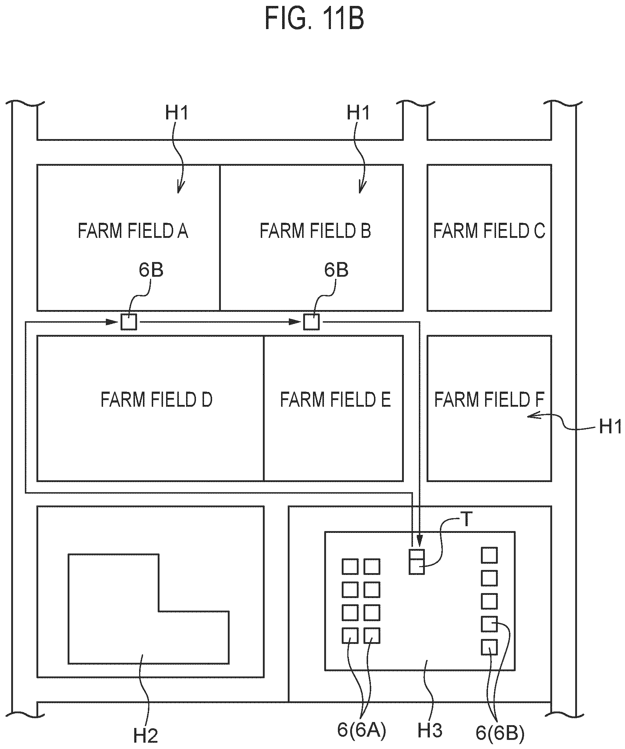

As shown in Figs. 11A and 11B, a delivery center H3 stores a replacement package body 6A (referred to as a first package body 6A) and a used package body 6B (referred to as a second package body 6B). The second package body 6B is charged with energy by a charging facility installed in the delivery center H3, and when the charging with the energy is completed, the second package body 6B is stored in the storage place as the first package body 6A. The delivery of the first package body 6A and the collection of the second package body 6B are performed by a transport vehicle T such as a truck. The first package body 6A is sufficiently charged with energy, and for example, when the maximum energy charge amount of the package body 6 is 100%, the charge amount is 80% or more. The charge amount is an example, and is not limited to 80% or more.

Fig. 11A illustrates a state in which the first package body 6A is delivered to the farm field H1, which is a delivery destination of the package body 6A, by the transport vehicle T. Fig. 11B illustrates a state in which the package body 6B is collected by the transport vehicle T.

The transport vehicle T delivers the package body 6A to the farm field H1 as the delivery destination according to any one of the energy information, a delivery plan, and a request for delivery of the first package body 6A from the tractor 101a. The transport vehicle T collects the package body 6B according to any one of the energy information, a collection plan, and a request for collection of the package body 6B from the tractor 101a. The transport vehicle T can move to the farm field H1 as the delivery destination by the manual driving or the automated driving.

Hereinafter, the delivery of the package body 6A and the collection of the package body 6B will be described.

As shown in Fig. 1, the communication device 45B is provided in the transport vehicle T. The communication device 45B can be connected to the management device 100 similarly to the communication device 45A, and can acquire various information transmitted from the management device 100. Further, an external terminal (driver terminal) 120C of the driver who drives the transport vehicle T can be connected to the management device 100, and can acquire various information transmitted from the management device 100. An external terminal (center terminal) 120D is provided in the delivery center H3. The center terminal 120D can be connected to the management device 100 and can acquire various information transmitted from the management device 100.

### <Energy Information>

When the current time reaches a predetermined time, the management device 100 transmits the energy information including the number of first package bodies 6A and farm field information regarding the farm field that is the delivery destination of the package body 6A to at least one of the transport vehicle T (communication device 45B), the driver terminal 120C, and the center terminal 120D. As shown in Fig. 14, the management device 100 transmits the energy information of April 8 to one of the transport vehicle T (communication device 45B), the driver terminal 120C, and the center terminal 120D. That is, the management device 100 transmits the energy information to one of the transport vehicle T (communication device 45B), the driver terminal 120C, and the center terminal 120D before the agricultural work is started. In a case where the energy information is received by the transport vehicle T, the driver can confirm the energy information received by the transport vehicle T by a display device loaded on the transport vehicle T. In a case where the energy information is received by the driver terminal 120C, the driver can confirm the energy information received by the driver terminal 120C on a screen of the driver terminal 120C. In a case where the energy information is received by the center terminal 120D, the worker at the delivery center can confirm the energy information received by the center terminal 120D on a screen of the center terminal 120D.

As shown in Fig. 14, it can be seen that two package bodies 6 of the "model number A" are necessary in the agricultural works in the farm field A and the farm field B by referring to the energy information of April 8. That is, in the farm field A and the farm field B, it is necessary to replace the package body 6 of the "model number A" loaded on the tractor 101a in the middle of the agricultural work. Therefore, as shown in Fig. 11A, at least two first package bodies 6A of the "model number A" are loaded on the transport vehicle T, and the driver drives the transport vehicle T to move the transport vehicle T from the delivery center H3 to the farm field A**.** When the transport vehicle T arrives at the farm field A, the driver places at least one first package body 6A in the farm field A, and then drives the transport vehicle T to move toward the farm field B. When the transport vehicle T arrives at the farm field B, the driver places at least one first package body 6A in the farm field B, and then returns the transport vehicle T to the delivery center H3. That is, the driver calculates which farm field H1 has a shortage of the package body 6 among the plurality of farm fields H1 (the farm field A, the farm field B, the farm field C, and the farm field F) and the number of package bodies 6 necessary for the corresponding farm field H1, and drives the transport vehicle T to deliver the package body 6 to the farm field H1 having the shortage of the package body 6. Meanwhile, the worker who has driven the tractor 101a exchanges the first package body 6A and the package body 6 (second package body 6B) loaded on the tractor 101a in each of the farm field A and the farm field B. The worker places the second package body 6B in the vicinities of the farm field A and the farm field B.

As shown in Fig. 11B, the driver can grasp from the energy information that the second package body 6B is placed in the vicinities of the farm field A and the farm field B after delivering the first package body 6A to the farm field A and the farm field B. After April 8, the driver moves the transport vehicle T to each of the farm field A and the farm field B, and collects the second package body 6B placed in the vicinities of the farm field A and the farm field B.

### <Delivery Plan and Collection Plan>

In the above-described embodiment, the delivery and collection of the package body 6 are performed by transmitting the energy information to at least one of the transport vehicle T (communication device 45B), the driver terminal 120C, and the center terminal 120D. However, the delivery and collection of the package body 6 may be performed based on the delivery plan and the collection plan.

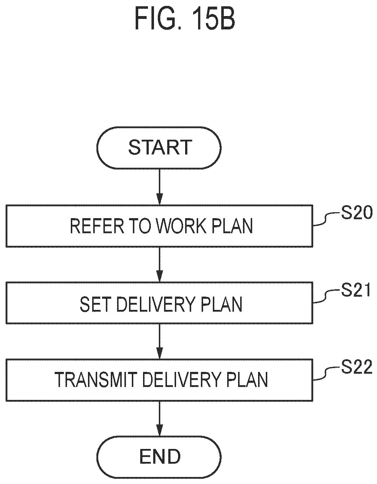

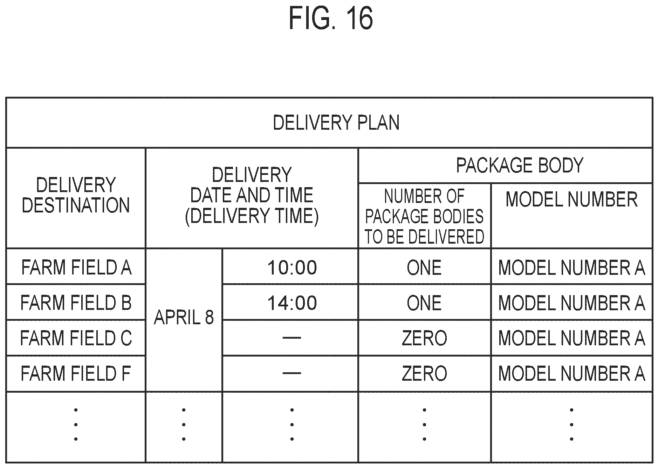

Fig. 15B illustrates an operation of delivering the first package body 6A in the delivery plan. When the current time reaches the predetermined time, the management device 100 refers to the work plan of the agricultural work (step S20). For example, the management device 100 refers to the energy information of April 8 including the work plan as shown in Fig. 14. The management device 100 sets the delivery plan based on the work plan (step S21). As shown in Fig. 16, the management device 100 sets the delivery destination, a delivery date and time, the number of package bodies 6 to be delivered, and the model number as the delivery plan. In the delivery plan of April 8, the management device 100 sets the delivery destination to the farm field indicated in the work plan of April 8. In the delivery plan of April 8, the management device 100 sets the delivery date and time to a date and time (start time) when the agricultural work is started in the farm field H1 or a time before a start date and time. In addition, in the delivery plan of April 8, the management device 100 sets the number obtained by dividing the number of package bodies 6 required for each farm field H1 by one as the number of package bodies 6 to be delivered. The management device 100 specifies that the package body 6 loaded on the tractor 101a is the "model number A" by referring to the energy information, and reflects the specified "model number A" in the identification information of the delivery plan. Note that, in Fig. 16, the number of package bodies 6 to be delivered being zero indicates that the delivery is not performed.

As shown in Fig. 15B, when the delivery plan is set, the management device 100 transmits a command (delivery command) for delivering the first package body 6A toward the farm field H1 a predetermined time before the delivery date and time, that is, a delivery instruction to at least one of the transport vehicle T (communication device 45B), the driver terminal 120C, and the center terminal 120D (step S22). The delivery command includes delivery position information including a position of the delivery destination, the delivery date and time, the number of package bodies 6 to be delivered, and the identification information. The management device 100 transmits, to at least one of the transport vehicle T (communication device 45B), the driver terminal 120C, and the center terminal 120D, the delivery command for delivering one first package body 6A of the "model number A" to each of the farm field A and the farm field B.

As described above, the management device 100 computes the delivery plan from the work plan, and transmits the delivery command (delivery instruction) to the transport vehicle T (communication device 45B), the driver terminal 120C, and the center terminal 120D based on the delivery plan, whereby the delivery of the first package body 6A can be easily performed.

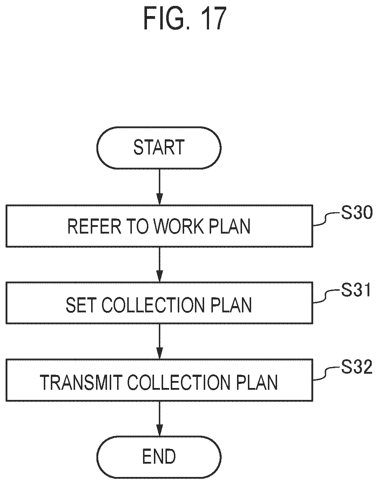

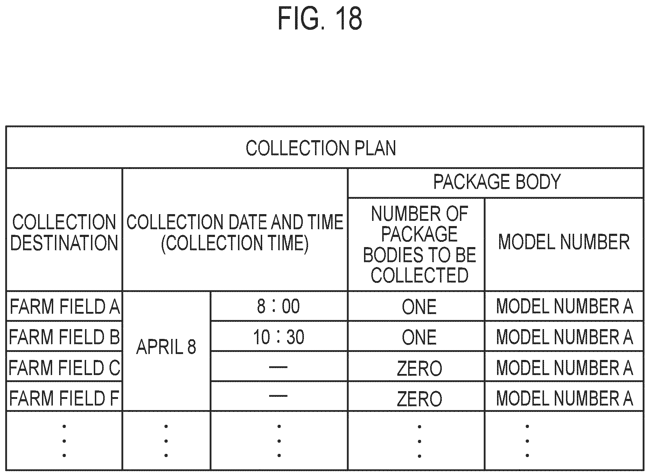

Fig. 17 illustrates an operation of collecting the second package body 6B in the collection plan. When the current time reaches the predetermined time, the management device 100 refers to the work plan of the agricultural work (step S30). For example, the management device 100 refers to the energy information of April 8 including the work plan as shown in Fig. 14. The management device 100 sets the collection plan based on the work plan (step S31). As shown in Fig. 18, the management device 100 sets a collection destination, a collection date and time, the number of package bodies 6 to be collected, and the model number as the collection plan. In the collection plan of April 8, the management device 100 sets the collection destination to the farm field indicated in the work plan for April 8. In the collection plan of April 8, the management device 100 sets the collection date and time to a date and time (end time) when the agricultural work ends in the farm field H1 or a time before and after the end time. In addition, in the collection plan of April 8, the management device 100 sets the number obtained by dividing the number of package bodies 6 required for each farm field H1 by one as the number of package bodies 6 to be collected. The management device 100 specifies that the package body 6 loaded on the tractor 101a is the "model number A" by referring to the energy information, and reflects the specified "model number A" in the identification information of the collection plan. Note that, in Fig. 18, the number of package bodies 6 to be collected being zero indicates that the collection is not performed.

As shown in Fig. 17, when the collection plan is set, the management device 100 transmits a command (collection command) for collecting the second package body 6B toward the farm field H1 a predetermined time before the collection date and time, that is, a collection command to at least one of the transport vehicle T (communication device 45B), the driver terminal 120C, and the center terminal 120D (step S32). The collection command includes collection position information including a position of the collection destination, the collection date and time, the number of package bodies 6 to be collected, and the identification information. The management device 100 transmits, to at least one of the transport vehicle T (communication device 45B), the driver terminal 120C, and the center terminal 120D, the collection command for collecting one second package body 6B from each of the farm field A and the farm field B.

As described above, the management device 100 computes the collection plan from the work plan, and transmits the collection command (collection instruction) to the transport vehicle T (communication device 45B), the driver terminal 120C, and the center terminal 120D based on the collection plan, whereby the collection of the second package body 6B can be easily performed.

### <Delivery Request and Collection Request>

In the above-described embodiment, the management device 100 transmits the delivery command and the collection command to at least one of the transport vehicle T (communication device 45B), the driver terminal 120C, and the center terminal 120D to deliver and collect the package body 6. However, the delivery and collection of the package body 6 may be performed in response to a request from the tractor 101a.

As shown in Fig. 2, an operation switch 130 is provided in the tractor 101a. The operation switch 130 is provided around the driver seat 10 and can be operated by the driver. When a predetermined operation is performed, the operation switch 130 makes at least one of a request (delivery request) for delivery of the first package body 6A and a request (collection request) for collection of the delivered second package body 6B. In a case of making the delivery request, the communication device 45A of the tractor 101a transmits information indicating the vehicle body position detected by the positioning device 40A and a request for delivery of the first package body 6A to at least one of the transport vehicle T (communication device 45B), the driver terminal 120C, and the center terminal 120D. When the delivery request is received, each of the transport vehicle T, the driver terminal 120C, and the center terminal 120D displays the identification information of the package body 6 loaded on the tractor 101a, the vehicle body position, and the request for the delivery.

In a case of making the collection request, the communication device 45A of the tractor 101a transmits information indicating the vehicle body position detected by the positioning device 40A and a request for collection of the second package body 6B to at least one of the transport vehicle T (communication device 45B), the driver terminal 120C, and the center terminal 120D. When the collection request is received, each of the transport vehicle T, the driver terminal 120C, and the center terminal 120D displays the identification information of the package body 6 loaded on the tractor 101a, the vehicle body position, and a request for collection of the second package body 6B.

As described above, it is possible to easily deliver and collect the package body 6 according to the delivery request and the collection request from the tractor 101a.

In the above-described embodiment, the delivery request or the collection request is made by operating the operation switch 130 provided in the tractor 101a. However, at least one of the delivery request and the collection request may be automatically made when the remaining level of the energy of the package body 6 mounted on the tractor 101a becomes equal to or less than a threshold. The control device 60 or the communication device 45A of the tractor 101a monitors the remaining level of the energy of the package body 6 being mounted based on the potential or the like detected by the measurement sensor 43j. In a case where the control device 60 monitors the remaining level of the energy, when the remaining level of the energy becomes equal to or less than the threshold, the control device 60 commands the communication device 45A to transmit the delivery request and the collection request, and the communication device 45A receives the command and transmits the delivery request and the collection request to at least one of the transport vehicle T (communication device 45B), the driver terminal 120C, and the center terminal 120D. In a case where the communication device 45A monitors the remaining level of the energy, when the remaining level of the energy becomes equal to or less than the threshold, the communication device 45A transmits the delivery request and the collection request to at least one of the transport vehicle T (communication device 45B), the driver terminal 120C, and the center terminal 120D regardless of a command from the control device 60.

Note that, in a case where the transport vehicle T is a vehicle capable of performing the automated driving, the transport vehicle T may move toward the farm field H1 by the automated driving in a case where a command (the delivery instruction or delivery request) for delivering the package body is received. Further, in a case where the transport vehicle T is a vehicle capable of performing the automated driving, the transport vehicle T may move toward the farm field H1 by the automated driving when a command (the collection instruction or collection request) for collecting the package body 6.

### <Degradation of Package Body/Fee Calculation>

In the delivery center H3, the first package body 6A designated by the delivery instruction or the delivery request is selected from among the plurality of first package bodies 6A stored in the delivery base H3, and work of loading the selected first package body 6A onto the transport vehicle T is performed. The management device 100 computes degradation of the first package body 6A from a delivery history of the plurality of first package bodies 6A stored in the delivery base H3 (delivery source), and the first package body 6A to be delivered is selected from among the plurality of first package bodies 6A based on the computed degradation of the first package body 6A.

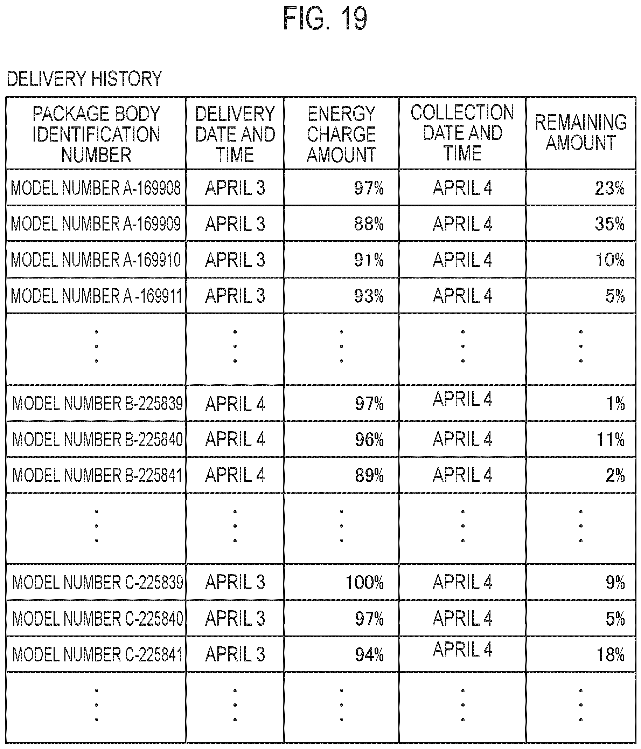

In the delivery center H3, the energy is measured before the delivery of the first package body 6A, and the energy is recorded in the external terminal 120D as a database together with the identification information of the package body 6 and the delivery date and time as the delivery history as shown in Fig. 19. When the collected second package body 6B reaches the delivery center H3, the remaining level of the energy of the second package body 6B at the time of collection is measured, and the remaining level of the energy at the time of collection is recorded as a database together with the delivery date and time and the collection date and time as the delivery history as shown in Fig. 19. The collected second package body 6B is charged with the energy by an energy charging device, and is stored in the storage place as the first package body 6A.

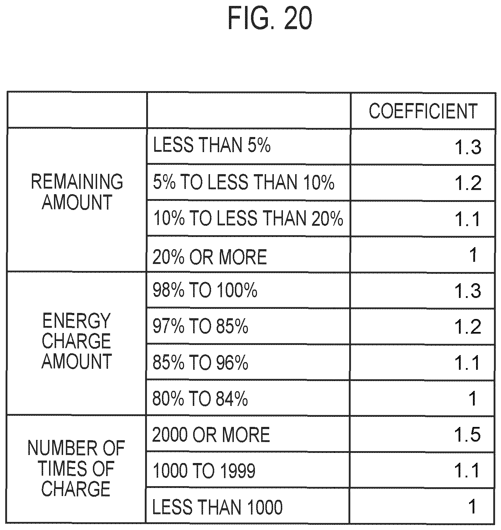

The external terminal 120D computes a degradation degree of the package body 6 for each package body 6 based on an energy charge amount, the remaining level, and the number of times of charge. As shown in Fig. 20, the external terminal 120D sets coefficients according to the remaining level, the energy charge amount, and the number of times of charge of the package body 6, computes a value obtained by multiplying by each coefficient as the degradation degree per one time, and computes the overall degradation degree by integrating the degradation degrees per one time. The computation of the degradation degree is an example and is not limited.

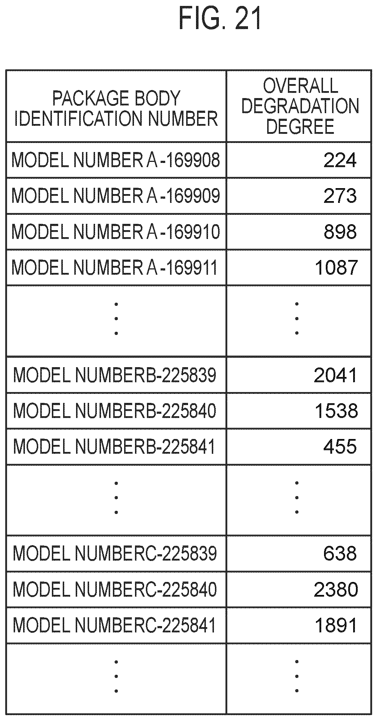

Fig. 21 illustrates the degradation degree of each package body 6 stored in the center terminal 120D. As shown in Fig. 21, in a case where four package bodies 6 of the "model number A" are stored as the first package bodies 6A, when it is necessary to deliver two first package bodies 6A, "Model Number A-169908" and "Model Number A-169909" having low degradation degrees are selected as the first package bodies 6A to be delivered. Once the center terminal 120D selects the first package body 6A, one of the transport vehicle T, the driver terminal 120C, and the center terminal 120D is notified of the identification number, a storage destination, and the like of the selected first package body 6A.

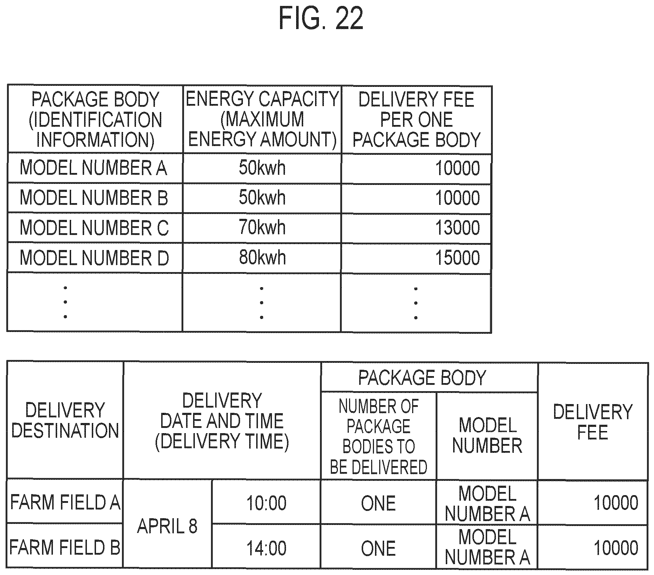

In the above-described embodiment, the management device 100 may determine a delivery fee based on a size (maximum energy capacity) of the first package body 6A to be delivered. As shown in Fig. 22, the management device 100 stores fee data indicating a relationship between the model number (identification information) of the first package body 6A and the delivery fee per one package body. In the fee data, the delivery fee per one package body is set higher as the maximum energy capacity increases. The management device 100 calculates the delivery fee for each farm field by multiplying the number of first package bodies 6A by the delivery fee per one package body, and transmits data of the calculated delivery fee to the manager terminal 120A. With this configuration, the delivery fee corresponding to the size of the first package body 6A can be easily calculated and charged to the manager or the like.

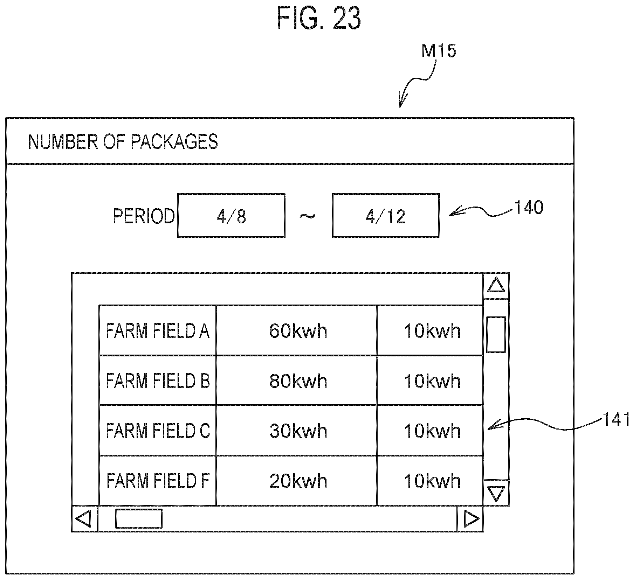

In the above-described embodiment, the number of package bodies 6 is obtained for each farm field H1 by automatically referring to the work plan. However, as shown in Fig. 23, a predetermined period may be input to a screen M15, the farm field H1 in which the agricultural work is performed in the input predetermined period may be searched, and the number of package bodies 6 required for performing the agricultural work in the farm field H1 extracted by the search may be obtained. When a request for computing the number of package bodies 6 is made to the management device 100 by performing a predetermined operation on the manager terminal 120A, the management device 100 displays the screen M15 on the manager terminal 120A. The screen M15 includes a period input section 140 for inputting a period. When the predetermined period is input to the period input section 140, the management device 100 refers to the work plan in the predetermined period, computes the number of package bodies 6 based on the referred work plan, and creates the energy information in the predetermined period. An information display section 141 in which the energy information is displayed is provided in the screen M15, and the energy information in the predetermined period is displayed in the information display section 141. The energy information displayed on the screen M15 of the manager terminal 120A is transmitted to at least one of the transport vehicle T, the driver terminal 120C, and the center terminal 120D. With this configuration, the energy information in the predetermined period can be easily grasped by the delivery center H3. In the above-described embodiment, the screen M15 is displayed on the manager terminal 120A, but the energy information may be displayed on the screen by displaying the screen M15 on any one of the transport vehicle T, the driver terminal 120C, and the center terminal 120D and operating any one of the transport vehicle T, the driver terminal 120C, and the center terminal.

### <Relay Point>

In the above-described embodiment, in a case of performing the delivery of the first package body 6A, the first package body 6A to be delivered is placed in the vicinity of the farm field H1. However, in a case where a relay point A5 through which the tractor 101a passes in the middle of the agricultural work is set, a guidance for placing the first package body 6A at the relay point A5 may be provided.

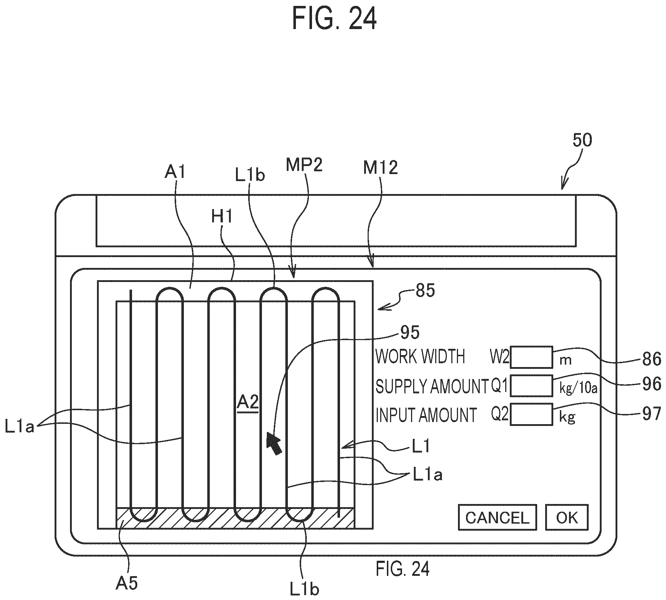

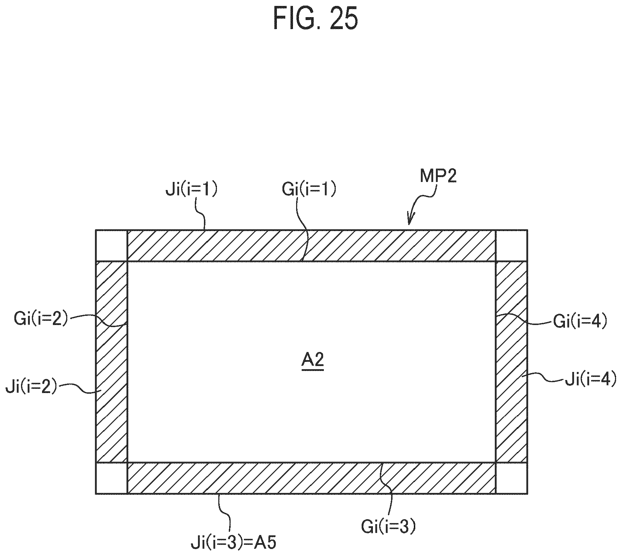

The relay point A5 can be set by the display device 50, the manager terminal 120A, and the worker terminal 120B. In the display device 50, when a predetermined operation is performed after setting the work area A2, the relay point A5 can be set. In the display device 50, the setting of the relay point A5 can be performed after the setting of the scheduled travel route L1 on the screen M12 as shown in Fig. 7B, or after the setting of the work area A2 on the screen M11 as shown in Fig. 7A. For example, as shown in Fig. 24, when a predetermined operation is performed while the screen M12 is displayed, the display device 50 enters a setting mode for the relay point A5, and a pointer section 95 is displayed on the screen M12. In a case where an area outside the work area A2 (external area), that is, the turning area A1, is selected by the pointer section 95, the selected turning area A1 is set as the relay point A5. Specifically, as shown in Fig. 25, the work area A2 includes a plurality of sides Gi (i = 1, 2, 3, 4, ..., and i), and the turning area A1 is divided into a plurality of areas Ji (i = 1, 2, 3, 4, ..., and i) that are in contact with the plurality of sides Gi. In this case, the area Ji selected by the pointer section 95 among the plurality of areas Ji is set as the relay point A5. For example, in a case where the work area A2 includes four sides G1, G2, G3, and G4, the turning area A1 includes four areas J1, J2, J3, and J4. Here, in a case where the area J3 is selected from among the four areas J1, J2, J3, and J4, the area J3 is set as the relay point A5, and the relay point A5 set outside the work area A2 is displayed on the display device 50 as shown in Fig. 24. As described above, the relay point A5 can be set to, for example, the area Ji that is in contact with an agricultural road outside the work area A2 according to a shape of the farm field, that is, a shape of the work area A2.

As described above, in a case where the relay point A5 is set in the display device 50, the data of the farm field map MP2 including the work area A2 and the relay point A5, and the farm field map including data indicating the positions of the work area A2 and the relay point A5 are stored in the display device 50. In addition, the farm field map including the relay point A5 is transmitted to the management device 100 via the communication device 45A, and the farm field map including the relay point A5 is stored in the management device 100. In a case where the relay point A5 is set in the manager terminal 120A or the worker terminal 120B, the farm field map in a state in which the relay point A5 is not set is read from the management device 100, and the read farm field map is displayed on the screen of the manager terminal 120A or the worker terminal 120B. The manager terminal 120A or the worker terminal 120B has a function of setting the relay point A5 similarly to the display device 50, and can set the relay point A5 by setting the area Ji with the pointer section 95 similarly to the display device 50. Also in a case where the relay point A5 is set in the manager terminal 120A or the worker terminal 120B, the data of the farm field map MP2 including the work area A2 and the relay point A5 and the farm field map including the data indicating the positions of the work area A2 and the relay point A5 are stored in the manager terminal 120A or the worker terminal 120B and transmitted to the management device 100, and the farm field map including the relay point A5 is stored in the management device 100.

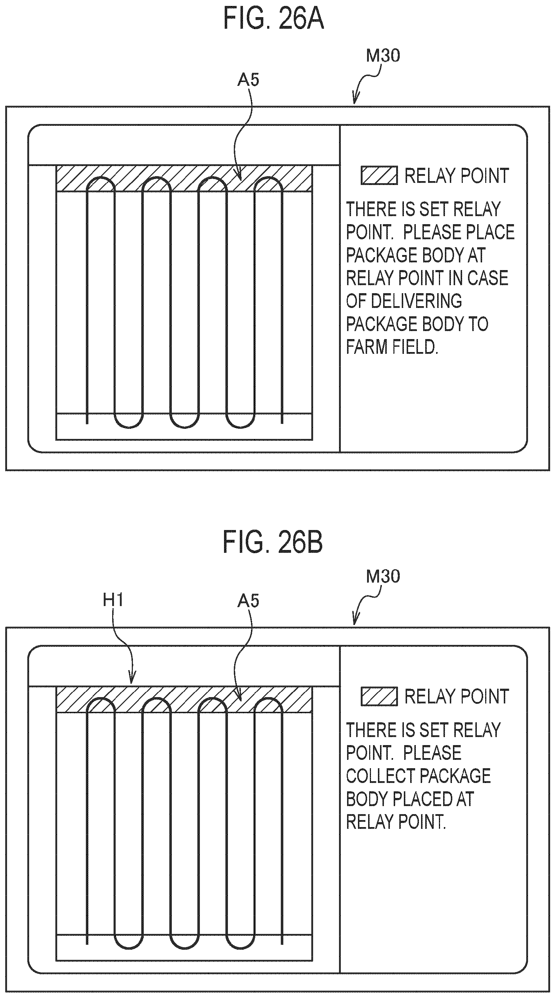

As described above, in a case where the relay point A5 is set, when delivering the first package body 6A or collecting the second package body 6B, the management device 100 transmits the farm field map including the relay point A5 to any one of the transport vehicle T, the driver terminal 120C, and the center terminal 120D, and displays the farm field map including the relay point A5 on a screen (referred to as a terminal screen) M30 of any one of the transport vehicle T, the driver terminal 120C, and the center terminal 120D as shown in Figs. 26A and 26B.

As shown in Fig. 26A, in a case of the delivery of the first package body 6A, the management device 100 displays a message indicating that the first package body 6A is to be placed at the relay point A5 on the terminal screen M30. As shown in Fig. 26B, in a case of the collection of the second package body 6B, the management device 100 displays a message indicating that the second package body 6B placed at the relay point A5 is to be collected on the terminal screen M30. That is, the management device 100 provides a guidance for delivering at least another first package body 6A different from the package body 6 mounted on the tractor 101a to the relay point A5 in order to continue the agricultural work of the tractor 101a in the farm field H1.

When the manager terminal 120A or the worker terminal 120B is connected to the management device 100 and a request for display of the relay point A5 is made, the farm field map including the relay point A5 can also be displayed on the manager terminal 120A or the worker terminal 120B similarly to Figs. 26A and 26B. In a case where the delivery of the first package body 6A or the collection of the second package body 6B is determined in a state in which the relay point A5 is displayed on the manager terminal 120A or the worker terminal 120B, the management device 100 displays a message indicating that the first package body 6A is to be placed at the relay point A5 or a message indicating that the second package body 6B placed at the relay point A5 is to be collected.

The management device 100 can set the relay point A5 as a place where the material such as a fertilizer, a pesticide, a seedling, or a seed is to be placed. The setting of the relay point A5 can be performed by any of the manager terminal 120A, the worker terminal 120B, and the display device 50. Hereinafter, for convenience of explanation, the manager terminal 120A, the worker terminal 120B, and the display device 50 are referred to as "agricultural terminals".

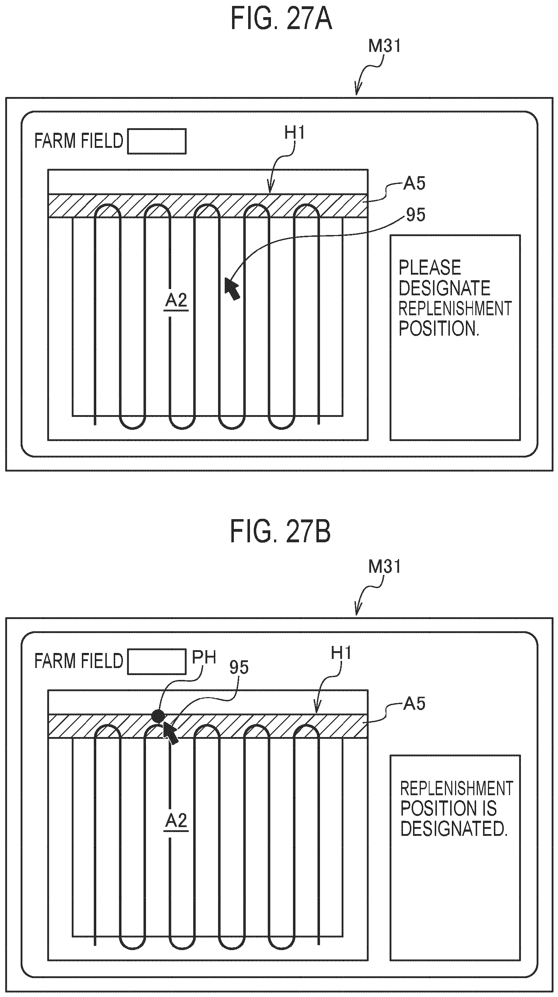

Specifically, when a material setting mode is set by operating the agricultural terminal, the agricultural terminal and the management device 100 are connected. In the material setting mode, an input section for inputting the farm field is displayed on a screen M31 of the agricultural terminal as shown in Fig. 27A. When the farm field identification information such as the farm field name is input to the input section of the screen M31, the management device 100 extracts the farm field H1 associated with the farm field identification information, and displays the farm field map including the extracted farm field H1 on the screen M31. In a case where the relay point A5 has already been set in the farm field map displayed on the screen M31 of the agricultural terminal, the management device 100 displays, on the screen M31 of the agricultural terminal, that the place where the material is to be placed is to be set. When the pointer section 95 displayed on the screen M31 of the agricultural terminal is moved to a predetermined position and a predetermined operation is performed while the pointer section 95 is within a range of the relay point A5, the management device 100 sets a position of the pointer section 95 as a replenishment position PH as shown in Fig. 27B. That is, the management device 100 sets the replenishment position PH on the farm field map displayed on the screen M31. The farm field map in which the replenishment position PH is set is stored in the management device 100 and the agricultural terminal. In a case where the relay point A5 is not set, the agricultural terminal (the manager terminal 120A, the worker terminal 120B, and the display device 50) can set the relay point A5 as described above.

As described above, in a case where the replenishment position PH is set in the agricultural terminal, the data of the farm field map MP2 including the work area A2, the relay point A5, and the replenishment position PH, and the farm field map including the data indicating the positions of the work area A2, the relay point A5, and the replenishment position PH are stored in the agricultural terminal and transmitted to the management device 100, and the farm field map including the relay point A5 and the replenishment position PH is stored in the management device 100.

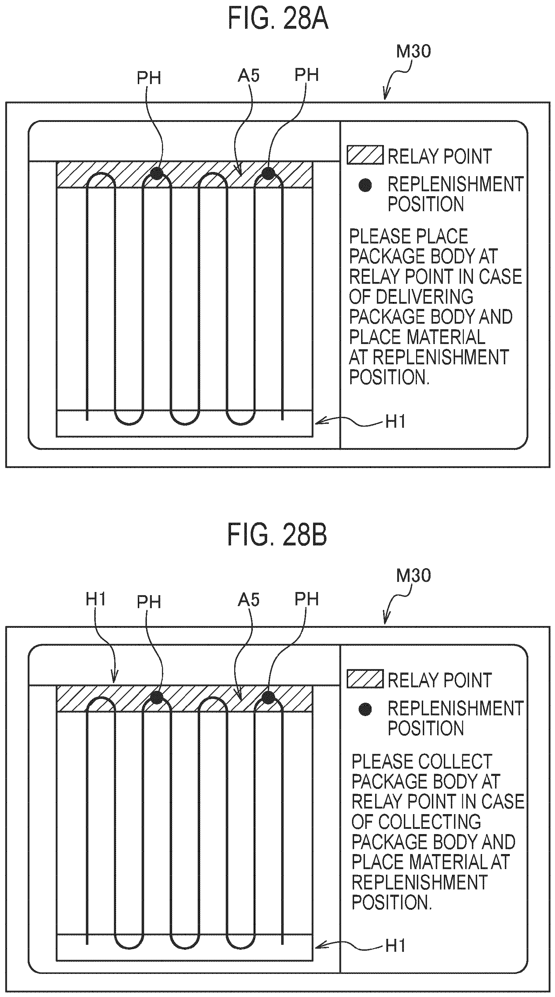

In this way, when the delivery of the first package body 6A is performed in a case where not only the relay point A5 but also the replenishment position PH is set, the management device 100 displays the farm field map including the replenishment position PH and the relay point A5 on the terminal screen M30 as shown in Fig. 28A, and displays a message indicating that material replenishment is to be performed at the replenishment position PH and that the first package body 6A is to be placed at the relay point A5. In addition, in a case of collecting the second package body 6B, the management device 100 displays the farm field map including the replenishment position PH and the relay point A5 on the terminal screen M30, and displays a message indicating that material replenishment is to be performed at the replenishment position PH and that the second package body 6B is to be collected at the relay point A5 as shown in Fig. 28B. When delivering the first package body 6A or collecting the second package body 6B, the management device 100 can also display a screen similar to the terminal screen M30 shown in Figs. 28A and 28B on the agricultural terminal (the manager terminal 120A, the worker terminal 120B, and the display device 50). Therefore, when the material is transported to the farm field H1, the worker confirms the farm field map including the replenishment position PH displayed on the agricultural terminal, so that the transported material can be placed at the replenishment position PH.

### <During Agricultural Work (Material)>

When the tractor 101a performs the agricultural work that consumes the material such as the fertilizer, the pesticide, the seedling, or the seed, in a case where the farm field map including the replenishment position PH and the relay point A5 is stored in the display device 50, the farm field map is displayed on the display device 50, and the current vehicle body position is also displayed on the farm field map. In a case where the farm field map including the replenishment position PH and the relay point A5 is not stored in the display device 50, the current vehicle body position is transmitted from the communication device 45A to the management device 100. In a case where the management device 100 searches for the farm field H1 from the vehicle body position and stores the farm field map in which the replenishment position PH and the relay point A5 are set in the searched farm field H1, the management device 100 transmits the farm field map to the communication device 45A of the tractor 101a, and the display device 50 displays the farm field map including the replenishment position PH and the relay point A5 transmitted from the management device 100.

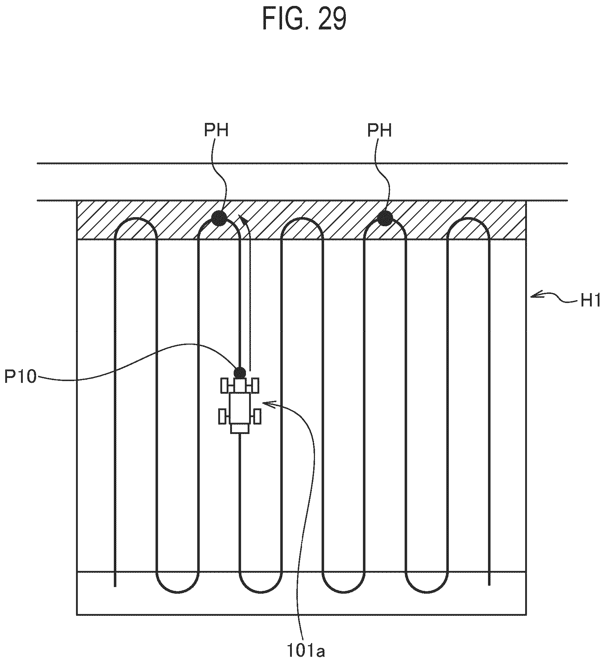

The tractor 101a includes a measurement sensor 43k that detects the amount of the material loaded on the working device 2. The measurement sensor 43k monitors the amount of the material during operation of the working device 2. The control device 60 automatically moves to the replenishment position PH of the relay point A5 when the amount of the material becomes equal to or less than a threshold during the automated driving. As shown in Fig. 29, when the amount of the material becomes equal to or less than the threshold at a point P10, the tractor 101a temporarily stops the work by the working device 2 at the point P10, automatically moves to the closest replenishment position PH from the current position, and stops at the replenishment position PH. Here, when the tractor 101a reaches the replenishment position PH for material replenishment, an alert device 44 loaded on the tractor 101a makes an alert for prompting replacement of the first package body 6A. That is, in a case where the communication device 45A of the tractor 101a is connected to the management device 100 and information indicating that the delivery of the first package body 6A is performed is received from the management device 100, or in a case where the farm field map displayed on the display device 50 indicates that the first package body 6A is placed at the relay point A5, the alert device 44 determines that the first package body 6A is delivered to the relay point A5, and makes an alert for prompting replacement of the first package body 6A. The alert device 44 may be a device that generates a voice or a sound or a device that displays a text or the like. In the above-described embodiment, the tractor 101a moves to the relay point A5 when the amount of the material becomes equal to or less than the threshold. However, the tractor 101a may travel toward the package body 6 delivered to the inside of the farm field (relay point A5) or the vicinity of the farm field when the remaining level of the mounted package body 6 becomes equal to or less than a threshold.

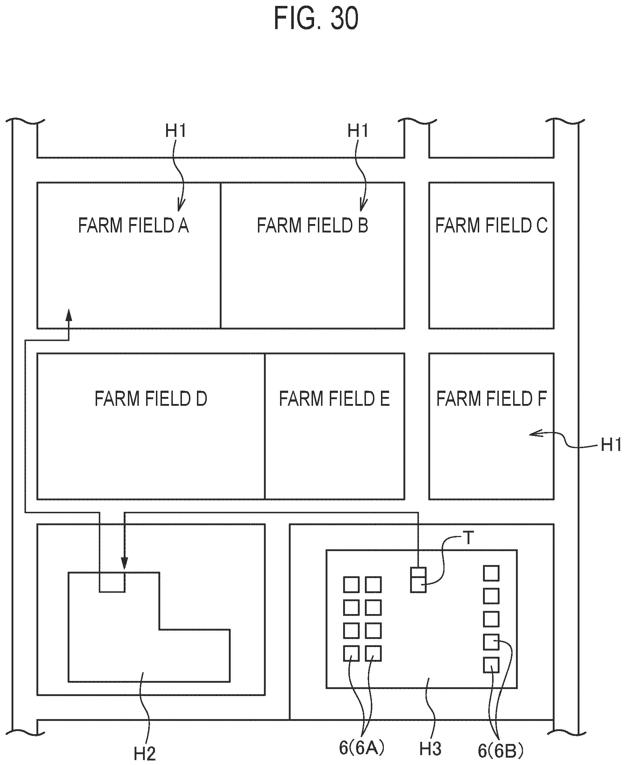

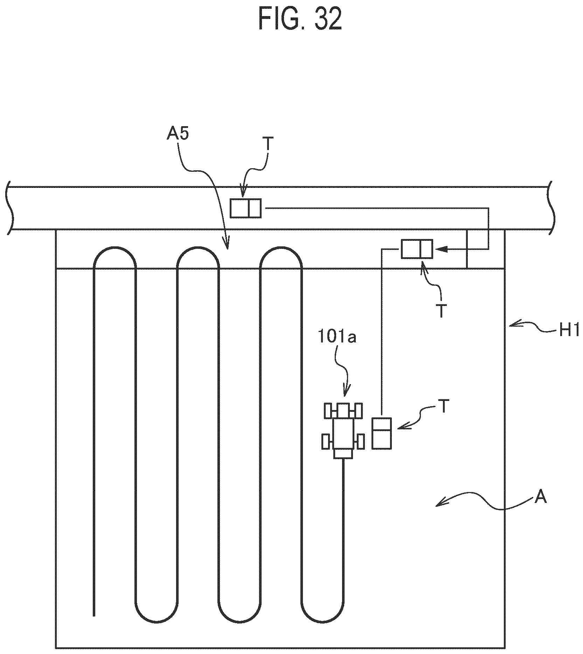

In the above-described embodiment, when the first package body 6A is delivered to the farm field H1, the first package body 6A is conveyed by the transport vehicle T. However, in addition to this, the transport vehicle T may convey not only the first package body 6A but also the material to the farm field H1. Fig. 30 illustrates a state in which the first package body and the material are delivered to the farm field H1. As shown in Fig. 30, the transport vehicle T loaded with the first package body 6A stops by the storage place H2 such as a barn, is loaded with the material in the storage place H2, and then moves from the storage place H2 to the farm field H1. When the transport vehicle T reaches the farm field H1, the transport vehicle T moves to the relay point A5 and stands by as shown in Fig. 32. The movement of the transport vehicle T may be performed by the automated driving or the manual driving.

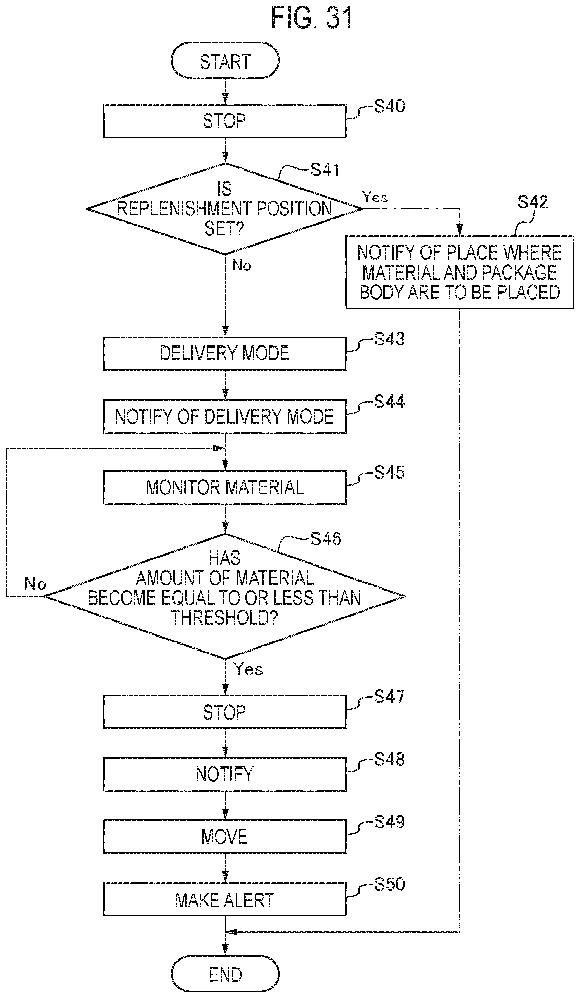

Fig. 31 illustrates an operation of the transport vehicle T loaded with the first package body 6A and the material. As shown in Fig. 31, the transport vehicle T stops at the relay point A5 after arriving at the relay point A5 (S40). The transport vehicle T is connected to the management device 100 or the tractor 101a via the communication device 45B, and inquires whether or not the replenishment position PH is set in the farm field H1 where the transport vehicle T is located (S41). In a case where the replenishment position PH is set in the farm field H1 (S41: Yes), a guidance for placing the material at the replenishment position PH and delivering the first package body 6A to the relay point is provided on a screen of the transport vehicle T (S42). In a case where the replenishment position PH is not set in the farm field H1 (S41: No), the transport vehicle T is set to a delivery mode (S43). In addition, the transport vehicle T notifies the tractor 101a of a transition to the delivery mode via the communication device 45B (S44). When the tractor 101a starts the agricultural work, the measurement sensor 43k monitors the material (S45). When the amount of the material becomes equal to or less than the threshold (S46: Yes), the tractor 101a stops (S47), and the tractor 101a notifies that the amount of the material has decreased or that it is necessary to move the transport vehicle T to the tractor 101a (S48). When the transport vehicle T is notified that the amount of the material has decreased or that it is necessary to move the transport vehicle T to the tractor 101a, the transport vehicle T automatically moves toward the tractor 101a as shown in Fig. 32 (S49). In a case where the transport vehicle T is moved by the manual driving, the terminal (the agricultural terminal or driver terminal 120C) owned by the driver who drives the transport vehicle may be notified that there is no material left or that it is necessary to move the transport vehicle T to the tractor 101a to make the driver drive the transport vehicle T to move the transport vehicle T toward the tractor 101a. When the transport vehicle T reaches the tractor 101a, an alert for prompting the replacement of the package body 6 is made in the transport vehicle T or the tractor 101a (S50). For example, information prompting the material replenishment and the replacement of the package body 6 is displayed on the screen of the transport vehicle T or the display device 50.

### <During Agricultural Work (Harvest)>

In the above-described embodiment, the relay point is a place where the replenishment of the material such as the fertilizer, the pesticide, the seedling, or the seed is performed, and is a place where the package body 6 is delivered or collected. However, instead, the relay point may be a place where the transport vehicle that receives a harvested product temporarily stands by, and may be a place for delivering and collecting the package body 6. In this case, since the replenishment position PH is a standby position of the transporter vehicle that receives the harvested product, the standby position can be set by the management device 100, the agricultural terminal, and the like by replacing the above-described replenishment position with the standby position.

Hereinafter, the relay point will be described as a place where the transport vehicle stands by. The above description is applied mutatis mutandis to the display of the message when setting the relay point and delivering and collecting the package body 6, the setting of the standby position, and the like, and thus, the description thereof will be omitted.

The management device 100 can create, as the relay point, a place where the transport vehicle that receives the harvested product harvested by the working device 2 of the tractor 101a stands by, and can provide a guidance for installing the first package body 6A at the relay point.

Then, when the tractor 101a performs the agricultural work for harvest, in a case where the farm field map including the replenishment position PH and the relay point A5 is stored in the display device 50, the farm field map is displayed on the display device 50, and the current vehicle body position is also displayed on the farm field map. In a case where the farm field map including the standby position PH and the relay point A5 is not stored in the display device 50, the current vehicle body position is transmitted from the communication device 45A to the management device 100. In a case where the management device 100 searches for the farm field H1 from the vehicle body position and stores the farm field map in which the standby position PH and the relay point A5 are set in the searched farm field H1, the management device 100 transmits the farm field map to the communication device 45A of the tractor 101a, and the display device 50 displays the farm field map including the standby position PH and the relay point A5 transmitted from the management device 100.

The tractor 101a includes a measurement sensor 431 that detects the amount of the harvested product. The measurement sensor 431 monitors the amount of the harvested product during operation of the working device 2. The control device 60 automatically moves to the standby position PH of the relay point A5 when the amount of the harvested product becomes equal to or more than a threshold during the automated driving. The tractor 101a temporarily stops the work by the working device 2 when the amount of the harvested product becomes equal to or more than the threshold, automatically moves from the current position to the closest standby position PH, and stops at the standby position PH. Here, when the tractor 101a reaches the temporary standby position PH of the transport vehicle, the alert device 44 loaded on the tractor 101a makes an alert for prompting replacement of the first package body 6A. That is, in a case where the communication device 45A of the tractor 101a is connected to the management device 100 and information indicating that the delivery of the first package body 6A is performed is received from the management device 100, or in a case where the farm field map displayed on the display device 50 indicates that the first package body 6A is placed at the relay point A5, the alert device 44 determines that the first package body 6A is delivered to the relay point A5, and makes an alert for prompting replacement of the first package body 6A.

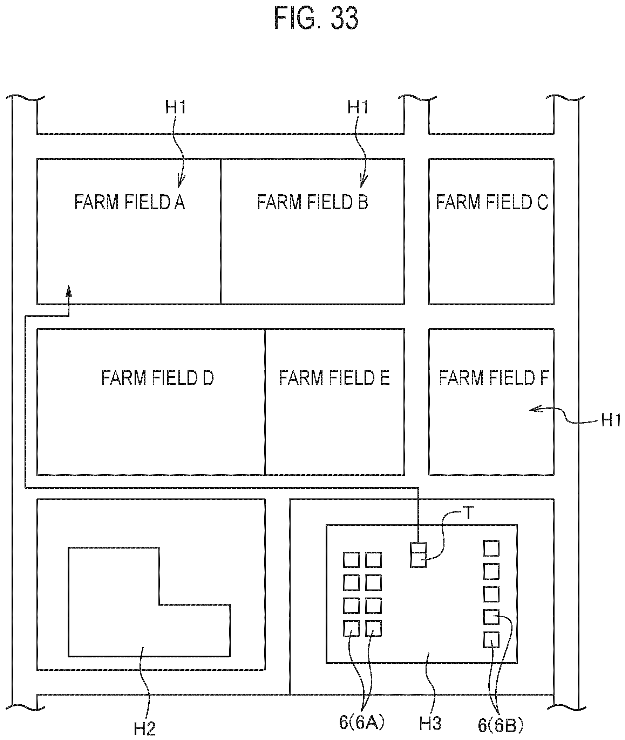

In the above-described embodiment, when the first package body 6A is delivered to the farm field H1, the first package body 6A is conveyed by the transport vehicle T. However, in addition to this, the transport vehicle T may be loaded with not only the first package body 6A but also the harvested product in the farm field H1. Fig. 33 illustrates a state in which the first package body 6A and a container containing no harvested product are transported to the farm field H1. As shown in Fig. 33, the transport vehicle T loaded with the first package body 6A stops at the storage place H2 such as a barn, is loaded with the container, and then moves from the storage place H2 to the farm field H1. When the transport vehicle T reaches the farm field H1, the transport vehicle T moves to the relay point A5 and stands by. The movement of the transport vehicle T may be performed by the automated driving or the manual driving.

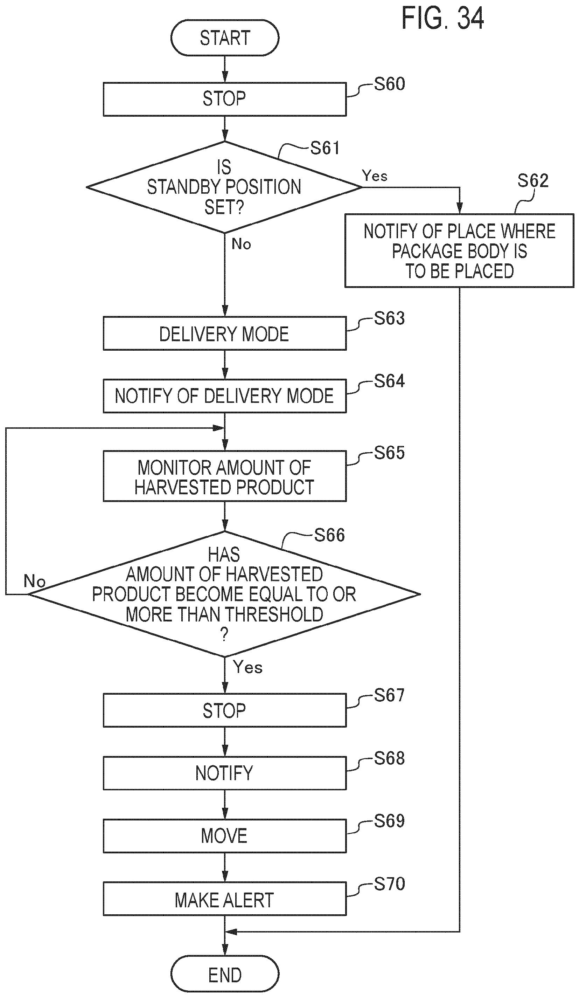

Fig. 34 illustrates an operation of the transport vehicle T in a case where the harvested product is put into the first package body 6A and the container. As shown in Fig. 34, the transport vehicle T stops at the relay point A5 after arriving at the relay point A5 (S60). The transport vehicle T is connected to the management device 100 or the tractor 101a via the communication device 45B, and inquires whether or not the standby position PH is set in the farm field H1 where the transport vehicle T is located (S61). In a case where the standby position PH is set in the farm field H1 (S61: Yes), a guidance for standing by around the replenishment position PH and delivering the first package body 6A to the relay point is provided on the screen of the transport vehicle T (S62). In a case where the standby position PH is not set in the farm field H1 (S61: No), the transport vehicle T is set to the delivery mode (S63). In addition, the transport vehicle T notifies the tractor 101a of a transition to the delivery mode via the communication device 45B (S64). When the tractor 101a starts the agricultural work, the measurement sensor 431 monitors the amount of the harvested product harvested by the tractor 101a (S65). When the amount of the harvested product becomes equal to or more than the threshold (S66: Yes), the tractor 101a stops (S67), and the tractor 101a notifies the transport vehicle T that the container containing the harvested product is full (S68). When the transport vehicle T is notified that the container containing the harvested product is full, the transport vehicle T automatically moves toward the tractor 101a as in Fig. 32 (S69). In a case where the transport vehicle T is moved by the manual driving, the terminal (the agricultural terminal or driver terminal 120C) owned by the driver who drives the transport vehicle may be notified that the container containing the harvested product is full to make the driver drive the transport vehicle T to move the transport vehicle T toward the tractor 101a. When the transport vehicle T reaches the tractor 101a, an alert for prompting discharge of the harvested product to the transport vehicle T (transfer of the harvested product harvested by the tractor 101a to the transport vehicle T) and replacement of the package body 6 is made in the transport vehicle T or the tractor 101a (S70). For example, information prompting the discharge of the harvested product to the transport vehicle T and the replacement of the package body 6 is displayed on the screen of the transport vehicle T or the display device 50.

### <Summary>

The energy support system for an agricultural machine (tractor 101a) to and from which the package body 6 charged with the energy is attachable and detachable and which is driven by the energy charged in the package body 6 includes the management device 100 that computes the energy consumption of the agricultural machine (tractor 101a) in a case where the agricultural machine (tractor 101a) performs the agricultural work and computes the number of package bodies 6 required for covering the energy consumption based on the energy consumption. With this configuration, the package body 6 in a case where the agricultural machine (tractor 101a) performs the agricultural work can be grasped. That is, the energy required for performing the agricultural work in the farm field H1 can be secured by the package body 6, and the agricultural work in the farm field H1 can be smoothly continued.

The management device 100 transmits the number of package bodies 6 and the farm field information regarding the farm field H1 that is the delivery destination of the package body 6 to any one of the transport vehicle T that transports the package body 6, the terminal 120C of the driver who drives the transport vehicle T, and the terminal 120D of the delivery center H3 for delivering the package body 6. With this configuration, the package body 6 required for the agricultural work can be easily delivered to the farm field H1.

The management device 100 computes the energy consumption of the agricultural machine (tractor 101a) in a case where the agricultural machine (tractor 101a) performs the agricultural work based on the content of the agricultural work performed in the farm field H1. With this configuration, the number of package bodies 6 corresponding to a load of the agricultural work can be easily obtained.

The management device 100 computes the energy consumption of the agricultural machine (tractor 101a) in a case where the agricultural machine (tractor 101a) performs the agricultural work for each of the plurality of farm fields H1 based on the content of the agricultural work of each of the plurality of farm fields H1, and computes the number of package bodies 6 for each of the plurality of farm fields H1 based on the computed energy consumption for each of the plurality of farm fields H1. With this configuration, even in a case where the agricultural work is performed by the agricultural machine (tractor 101a) in order in the plurality of farm fields H1, it is possible to prevent the agricultural work from being unable to be performed in the middle due to exhaustion of the energy of the package body 6.

The management device 100 searches for the farm field H1 where the agricultural work is performed in a predetermined period among the plurality of farm fields H1, and extracts the farm field H1 extracted by the search and the number of package bodies 6 used in the extracted farm field H1. Therefore, the package body 6 required for the agricultural work in the predetermined period (for example, one day) can easily be prepared, so that the agricultural work in the predetermined period can smoothly be performed.

The management device 100 transmits the package body 6 for each searched farm field H1 and information regarding each farm field H1 to any one of the transport vehicle T that transports the package body 6, the terminal 120C of the driver who drives the transport vehicle T, and the terminal 120D of the delivery center H3 for delivering the package body 6. With this configuration, the package body 6 required for the agricultural work in the predetermined period (for example, one day) can be easily delivered to the farm field H1.

The management device 100 issues the delivery instruction for the package body 6 to any one of the transport vehicle T that transports the package body 6, the terminal 120C of the driver who drives the transport vehicle T, and the terminal 120D of the delivery center H3 for delivering the package body 6. With this configuration, the worker who delivers the package body 6 can easily grasp information for delivering the package body 6 to the farm field H1 by viewing the transport vehicle T and the terminals 120C and 120D.

When the energy of the mounted package body 6 becomes equal to or less than the threshold, the agricultural machine (tractor 101a) travels toward the package body 6 delivered to the inside of the farm field H1 or the vicinity of the farm field H1. With this configuration, it is easy to reach the inside of the farm field H1 or the vicinity of the farm field H1 where the new package body 6 is placed, and work of replacing the package body 6 can be easily performed in the farm field H1 or in the vicinity of the farm field H1 before the energy of the package body 6 loaded on the agricultural machine (tractor 101a) is exhausted.

The management device 100 issues the collection instruction for the package body 6 to any one of the transport vehicle T that transports the package body 6, the terminal 120C of the driver who drives the transport vehicle T, and the terminal 120D of the delivery center H3 for delivering the package body 6. With such a configuration, it is possible to easily collect the package body 6 that is detached from the agricultural machine (tractor 101a) and is placed at a predetermined place in order to replace the package body 6.

An energy support method for an agricultural machine (tractor 101a) to which the package body 6 charged with the energy is detachably attached includes: computing the energy consumption of the agricultural machine (tractor 101a) in a case where the agricultural machine (tractor 101a) performs the agricultural work before the agricultural machine (tractor 101a) performs the agricultural work in the farm field H1 and computing the number of package bodies 6 required for covering the energy consumption based on the energy consumption. With this configuration, the package body 6 in a case where the agricultural machine (tractor 101a) performs the agricultural work can be grasped. That is, the energy required for performing the agricultural work in the farm field H1 can be secured by the package body 6, and the agricultural work in the farm field H1 can be smoothly continued.

The energy support system for an agricultural machine (tractor 101a) to and from which the package body 6 charged with the energy is attachable and detachable and which is driven by the energy charged in the package body 6 includes the management device 100 that acquires any one of the work plan of the agricultural work performed by the agricultural machine (tractor 101a) in the farm field H1 or the request from the agricultural machine (tractor 101a), and issues a command for delivering the package body 6 toward the farm field H1 to any one of the transport vehicle T, the terminal 120C of the driver who drives the transport vehicle T, and the terminal 120D of the delivery center H3 for delivering the package body 6 according to the delivery plan set based on the work plan or the request. With this configuration, a person involved in the delivery of the package body 6, that is, the driver who drives the transport vehicle, the manager who manages the package body 6 in the delivery center H3, the worker, and the like can grasp that the package body 6 is to be delivered to the farm field H1 according to the work plan of the agricultural work, that the package body 6 is to be delivered to the farm field H1 according to the request from the agricultural machine (tractor 101a), and the like. That is, the package body 6 required for the agricultural work can be smoothly delivered to the farm field H1 according to the work plan or the agricultural machine (tractor 101a). That is, the package body 6 can be delivered at the time of performing the agricultural work to the place (farm field) where the agricultural work is performed.

The management device 100 acquires any one of the work plan of the agricultural work performed by the agricultural machine (tractor 101a) in the farm field H1 and the request from the agricultural machine (tractor 101a), and issues a command for collecting the package body 6 to any one of the transport vehicle T, the terminal 120C of the driver who drives the transport vehicle T, and the terminal 120D of the delivery center H3 for delivering the package body 6 according to the collection plan set based on the work plan or the request. With this configuration, a person involved in the collection of the package body 6, that is, the driver who drives the transport vehicle, the manager who manages the package body 6 in the delivery center H3, the worker, and the like can grasp that the package body 6 is to be collected according to the work plan of the agricultural work, that the package body 6 is to be collected according to the request from the agricultural machine (tractor 101a), and the like. That is, the package body 6 can be smoothly collected according to the work plan or the agricultural machine (tractor 101a).

The agricultural machine (tractor 101a) includes the operation switch 130 that makes at least one of a request for delivery of the package body 6 and a request for collection of the package body 6. With this configuration, the driver who drives the agricultural machine (tractor 101a) or an agricultural worker who performs the agricultural work can easily make the request for delivery of the package body 6 and the request for collection of the package body 6 only by operating the operation switch 130 as necessary.

The agricultural machine (tractor 101a) includes the communication device 45A that makes at least any one of the request for delivery of the package body 6 or the request for collection of the package body 6 when the energy of the package body 6 loaded on the agricultural machine (tractor 101a) becomes equal to or less than the threshold. With this configuration, when the energy of the package body 6 mounted on the agricultural machine (tractor 101a) becomes equal to or less than the threshold, the request for delivery of the package body 6 and the request for collection of the package body 6 can be easily made automatically.

In a case where the command for delivering the package body 6 is received, the transport vehicle T moves toward the farm field H1 by the automated driving. With this configuration, the package body 6 can be carried into the farm field H1 without performing the manual driving of the transport vehicle T.

In a case where the command for collecting the package body 6 is received, the transport vehicle T moves toward the farm field H1 by the automated driving. With this configuration, the transport vehicle T for collecting the package body 6 can reach the farm field H1 without performing the manual driving of the transport vehicle T.

The management device 100 computes degradation of the package body 6 from the delivery history of the plurality of package bodies 6 stored in the delivery source, and selects the package body 6 to be delivered from among the plurality of package bodies 6 based on the computed degradation of the package body 6. With this configuration, it is possible to prevent the plurality of package bodies 6 stored in the delivery source from being extremely degraded in a short period of time.

The management device 100 determines the delivery fee based on the size of the package body 6 to be delivered. With this configuration, even in a case where there are many package bodies 6 having different sizes, it is possible to obtain the delivery fee corresponding to the energy amount.

The energy support system for an agricultural machine (tractor 101a) to and from which the package body 6 charged with the energy is attachable and detachable and which is driven by the energy charged in the package body 6 includes the management device 100 that provides a guidance for delivering another package body 6 different from the package body 6 mounted on the agricultural machine (tractor 101a) to the relay point through which the agricultural machine passes in the middle of the agricultural work in order to continue the agricultural work of the agricultural machine (tractor 101a) in the farm field H1. With this configuration, the package body 6 can be delivered to a place where the agricultural machine (tractor 101a) passes during the agricultural work. The work for replacing the package body 6 can be smoothly performed during the agricultural work. That is, since the package body 6 is delivered to the relay point through which the agricultural machine (tractor 101a) passes in the middle of the agricultural work, the agricultural machine (tractor 101a) can be replenished with the energy quickly, and efficiency of the agricultural work can be improved.

The management device 100 creates, as the relay point, a place where the material with which the agricultural machine (tractor 101a) is to be replenished is placed, and provides a guidance for installing another package body 6 at the relay point. With this configuration, the material replenishment and the replacement of the package body 6 can be performed at the same time.

The agricultural machine (tractor 101a) moves toward the relay point when the amount of the material loaded on the agricultural machine (tractor 101a) in the agricultural work becomes equal to or less than the threshold. With this configuration, the replacement of the package body 6 can be performed according to a timing of the material replenishment at the relay point.

When the amount of the material loaded on the agricultural machine (tractor 101a) becomes equal to or less than the threshold in the agricultural work, the transport vehicle T loaded with the material and another package body 6 at the relay point is moved from the relay point toward the agricultural machine (tractor 101a). Accordingly, not only the material but also the package body 6 can be quickly carried to a position close to the agricultural machine (tractor 101a) at a timing of replenishing the agricultural machine (tractor 101a) with the material, so that the replacement of the package body 6 and the material replenishment can be performed at the same time at a place where the agricultural machine (tractor 101a) is located.

When the transport vehicle T reaches the agricultural machine (tractor 101a), an alert for prompting the replacement of the package body 6 is made in the transport vehicle T or the agricultural machine (tractor 101a). With this configuration, the driver who drives the transport vehicle T or the agricultural machine (tractor 101a) can be easily notified that the package body 6 can be replaced.

The management device 100 creates, as the relay point, the place where the transport vehicle T that receives the harvested product harvested by the agricultural machine (tractor 101a) stands by, and provides a guidance for installing another package body 6 at the relay point. With this configuration, the replacement of the package body 6 can be performed according to a timing of transferring the harvested product to the transport vehicle T at the relay point.

The agricultural machine (tractor 101a) moves toward the relay point when the amount of the harvested product harvested by the agricultural machine (tractor 101a) in the agricultural work becomes equal to or more than the threshold. With this configuration, the replacement of the package body 6 can be performed according to a timing of transferring the harvested product to another transport vehicle or the like at the relay point.

When the amount of the harvested product harvested by the agricultural machine (tractor 101a) in the agricultural work is equal to or more than the threshold and another battery is loaded on the transport vehicle T, the transport vehicle T is moved from the relay point toward the agricultural machine (tractor 101a). With this configuration, not only the harvested product but also the package body 6 can be quickly carried to a position close to the agricultural machine (tractor 101a) at a timing at which the agricultural machine (tractor 101a) discharges the harvested product, and the replacement of the package body 6 and the discharge of the harvested product can be performed at the same time at a place where the agricultural machine (tractor 101a) is located.

The agricultural machine (tractor 101a) includes the vehicle body 2 to and from which the package body 6 charged with the energy is attachable and detachable, the prime mover 4 that is driven by the energy charged in the package body 6, and the working device 3, in which in a case where it is necessary to replenish the working device 3 with the material or it is necessary to discharge the harvested product harvested by the working device 3, the vehicle body 2 moves to the relay point where another package body 6 different from the package body 6 mounted on the agricultural machine (tractor 101a) is placed. With this configuration, the package body 6 can be replaced at the relay point A5 at a timing of replenishing the working device 3 with the material or a timing of discharging the harvested product harvested by the working device 3.

In the first embodiment, the number of package bodies 6 loaded on the tractor 101a is not limited. For example, a plurality of package bodies 6 may be loaded on the tractor 101a, and among the plurality of package bodies 6, at least one package body 6 may be replaceable, and other package bodies 6 may be fixed and unreplaceable. Alternatively, the tractor 101a may be loaded with a plurality of package bodies 6, and all of the plurality of package bodies 6 may be replaceable.

### [Second Embodiment]

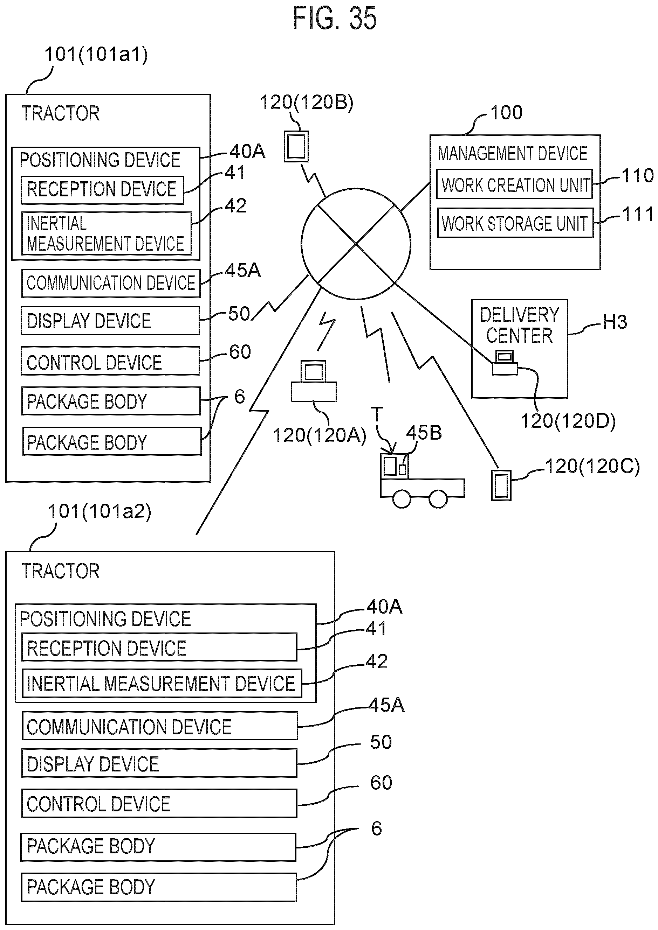

Fig. 35 is an overall diagram showing an energy support system for an agricultural machine according to a second embodiment. An agricultural machine 101 according to the second embodiment is also a tractor, a combine harvester, a rice transplanter, or the like, an implant, or the like. In the second embodiment, the description of the same configuration as that of the first embodiment will be omitted. In the second embodiment, a tractor will be described as an example. A case where a package body is a battery will be described.

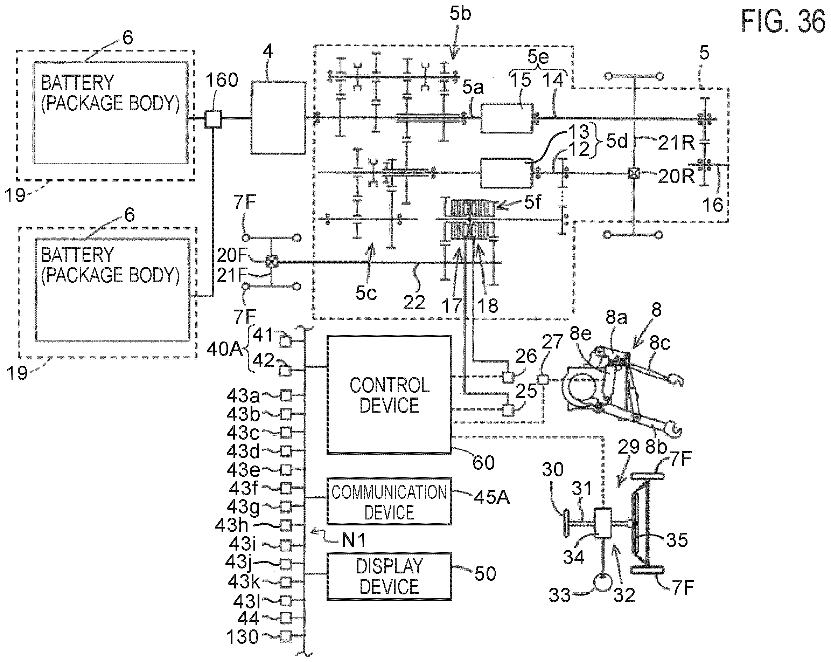

As shown in Fig. 35, a plurality of package bodies 6 are loaded on a tractor 101a. Among the plurality of package bodies 6, at least one package body 6 is replaceable. As shown in Fig. 36, the plurality of package bodies 6 are connected to an adjuster 160. The adjuster 160 is configured to switch to any one of a discharge mode or a regeneration mode based on a control signal from a control device 60. When in the discharge mode, the adjuster 160 receives electric power from the plurality of package bodies 6. The adjuster 160 adjusts a ratio of received electric power of each of the plurality of package bodies 6 based on the control signal from the control device 60. The electric power received by the adjuster 160 is transmitted to a prime mover 4 (electric motor).

The energy support system for an agricultural machine according to the second embodiment is a system in which, in a case where an energy amount of the package body 6 loaded on each of a plurality of tractors 101a is equal to or more than a threshold, the package body 6 having the energy equal to or more than the threshold is delivered. For convenience of explanation, it is assumed that there are two tractors 101a, the first tractor will be referred to as a first tractor 101a1, and the second tractor will be referred to as a second tractor 101a2.

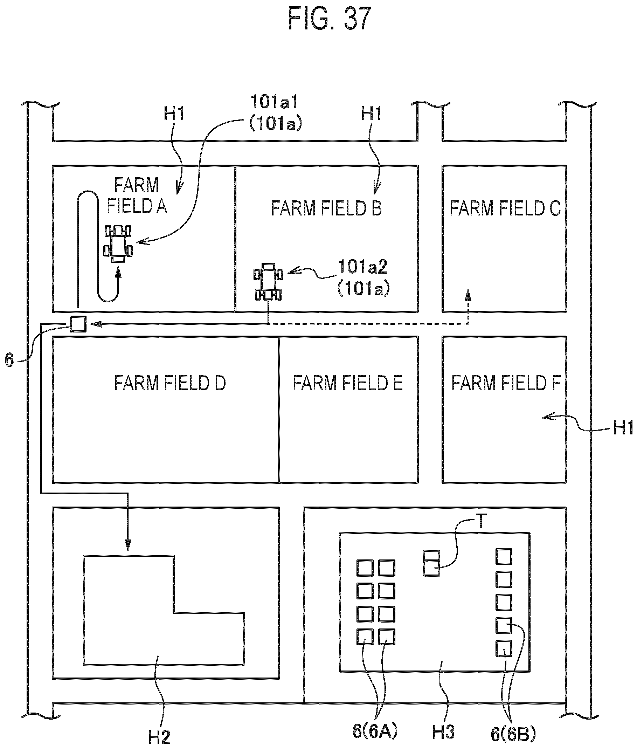

Fig. 37 illustrates a state in which the first tractor 101a1 and the second tractor 101a2 perform work in a farm field H1. As shown in Fig. 37, for example, the first tractor 101a1 is continuing agricultural work in a farm field A, and the second tractor 101a2 ends the agricultural work in a farm field B. The second tractor 101a2 is scheduled to return to a storage place H2 when the agricultural work for one day ends. The second tractor 101a2 moves to another farm field H1 (for example, a farm field C) when the agricultural work for one day has not ended.

In a case where the second tractor 101a2 is scheduled to return to the storage place H2, and energy of the plurality of package bodies 6 loaded on the second tractor 101a2 has sufficient energy to return to the storage place H2, the second tractor 101a2 performs an operation of, for example, distributing at least one package body (referred to as a charged package body) 6 having energy equal to or more than the threshold among the plurality of package bodies 6 to the first tractor 101a1 which is another tractor 101a. While returning from the farm field B to the storage place H2, the second tractor 101a2 moves to a relay point A5 in the farm field A where the first tractor 101a1 performs the agricultural work or the vicinity of the farm field A, and stops at the relay point A5 in the farm field A or in the vicinity of the farm field A. A worker performing the work in the farm field A, a worker riding in the second tractor 101a2, or the like places the charged package body 6 of the second tractor 101a2 at the relay point A5 in the farm field A or in the vicinity of the farm field A. When work of placing the charged package body 6 at the relay point A5 in the farm field A or in the vicinity of the farm field A ends, the second tractor 101a2 moves toward the storage place H2.

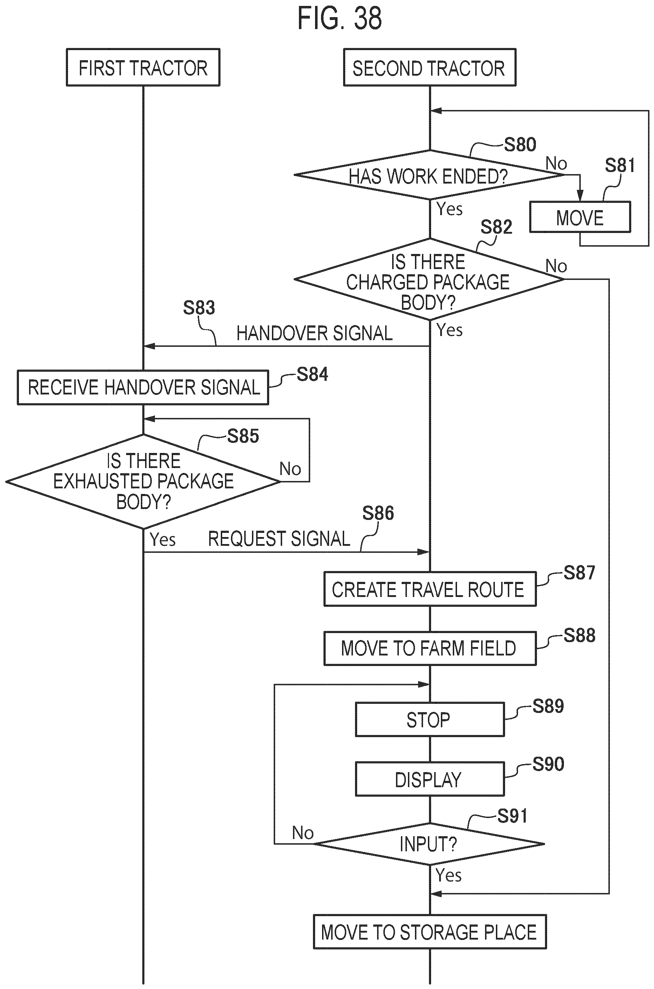

Fig. 38 illustrates an operation in which the second tractor 101a2 delivers the charged package body 6 to the first tractor 101a1. As shown in Fig. 38, the control device 60 or a display device 50 of the second tractor 101a2 determines whether or not the work for a predetermined period (for example, one day) has ended after the end of the work in the farm field B (S80). Specifically, the control device 60 or the display device 50 is connected to a management device 100 via a communication device 45A, or extract a work plan by referring to a storage device such as a nonvolatile memory of the display device 50. After extracting the work plan, the control device 60 or the display device 50 refers to an agricultural work record (for example, a vehicle body position) from the start of the agricultural work to the present, and determines that the work has ended when the agricultural work record indicates that the agricultural work has been performed in all the farm fields indicated by the work plan (S80: Yes). For example, in a case where the work plan indicates that the agricultural work is performed in the farm field B and the farm field C, when the agricultural work record (vehicle body position) of the second tractor 101a2 indicates that the second tractor 101a2 performs the work while moving in the farm field B and the farm field C, the control device 60 or the display device 50 of the second tractor 101a2 determines that the work for the predetermined period (one day) has ended.

On the other hand, when the agricultural work record does not indicate that the agricultural work has been performed in all the farm fields indicated by the work plan for the predetermined period, the control device 60 or the display device 50 determines that the work for the predetermined period has not ended (S80: No). In the above-described embodiment, the vehicle body position is exemplified as the agricultural work record. However, the agricultural work record is not limited to the vehicle body position, and any record may be used as long as it is possible to determine whether or not the agricultural work has been performed in units of the farm field H1.

In a case where the control device 60 determines that the work for the predetermined period has not ended (S80: No), the control device 60 of the second tractor 101a2 controls traveling to move from the current farm field to the farm field H1 where the next agricultural work is to be performed by automated driving (S81). For example, as shown in Fig. 37, the control device 60 of the second tractor 101a2 performs traveling from the farm field B to an agricultural road (road), move toward the farm field C, and enter the farm field C by the automated driving after the end of the work in the farm field B.

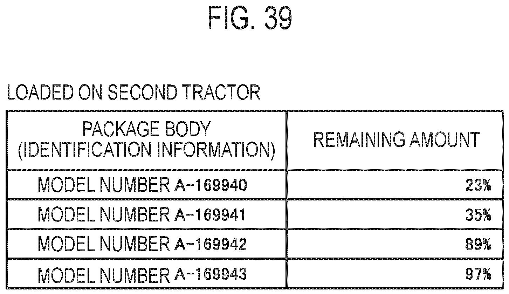

In a case where the work for the predetermined period has ended (S80: Yes), the control device 60 of the second tractor 101a2 determines whether or not there is a package body (referred to as a charged package body) having the energy equal to or more than the threshold (S82). As shown in Fig. 39, the control device 60 of the second tractor 101a2 measures the energy of the plurality of package bodies 6 with a measurement sensor 43j, and extracts, as the charged package body, the package body 6 having the energy equal to or more than the threshold (for example, 80% or more) from among the plurality of package bodies 6.

In a case where there is a charged package body 6 (S82: Yes), the control device 50 of the second tractor 101a2 transmits a signal (handover signal) indicating that the package body 6 can be delivered to another agricultural machine 101 (vehicle body 3) via the communication device 45A (S83). For example, the second tractor 101a2 transmits a signal indicating that the package body 6 can be delivered to the first tractor 101a1. When the first tractor 101a1 (control device 60) receives the handover signal for the package body 6 (S84), the control device 60 of the first tractor 101a1 measures the energy of the plurality of package bodies 6 with the measurement sensor 43j, and determines whether or not there is a package body (referred to as an exhausted package body) 6 having energy equal to or less than the threshold (for example, 20% or less) (S85).

In a case where there is an exhausted package body 6 (S85: Yes), the first tractor 101a1 (control device 60) transmits a request (request signal) for bringing the package body 6 to the second tractor 101a2 from which the handover signal has been transmitted, the request including the current vehicle body position of the first tractor 101a1 (S86).

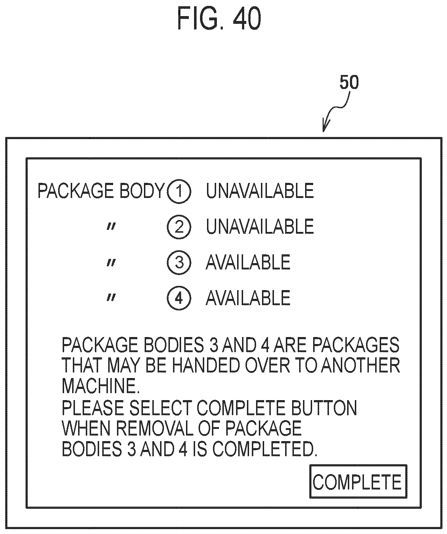

When the request (request signal) to bringing the package body 6 is received, the control device 60 of the second tractor 101a2 creates a scheduled travel route from the current vehicle body position to the farm field A where the first tractor 101a1 is present (S87), and moves toward the farm field A by the automated driving (S88). The control device 60 of the first tractor 101a2 stops at the relay point A5 in the farm field A or in the vicinity of the farm field A (S89). As shown in Fig. 40, the display device 50 of the second tractor 101a2 displays information indicating which of the plurality of package bodies 6 the charged package body 6 is (the package body 6 that may be delivered to the first tractor 101a1) (S90). The information indicating the charged package body 6 (the package body 6 that may be delivered to the first tractor 101a1) may be displayed on an agricultural terminal.

When the charged package body 6 is placed at the relay point A5 in the farm field A or in the vicinity of the farm field A, that is, when information indicating that the charged package body 6 has been placed is input to the display device 50 of the second tractor 101a2 (a complete button in Fig. 40 is selected) (S91: Yes), the control device 60 of the second tractor 101a2 performs control to cause the tractor 101a2 to travel from the current position to the storage place H2 (S92).

As shown in Fig. 39, in a case where there are a plurality of charged package bodies 6 in the second tractor 101a2, the control device 60 selects the charged package body 6 that can be delivered to the first tractor 101a1 from among the plurality of charged package bodies.

The total energy amount of other package bodies 6 than the charged package body 6 among the plurality of package bodies 6 is computed, whether the second tractor 101a2 can return from the farm field A to the storage place H2 is computed using the total energy amount, and when the return is possible, all the charged package bodies 6 of the second tractor 101a2 are selected as the charged package bodies 6 that can be delivered to the first tractor 101a1.

On the other hand, in a case where the second tractor 101a2 cannot return from the farm field A to the storage place H2 using the total energy amount of other package bodies 6 than the charged package body 6, the control device 60 sets at least one of the plurality of charged package bodies 6 as a returning package body. Then, the control device 60 computes the total amount of the energy of the returning package body and the energy of other package bodies 6, and in a case where the tractor 101a2 can return from the farm field A to the storage place H2 by the total energy amount, the package body 6 other than the returning package body 6 is selected as the package body 6 that can be delivered to the first tractor 101a1 among the plurality of charged package bodies 6. Information regarding the selected charged package body 6 is displayed on the display device 50 as described above.

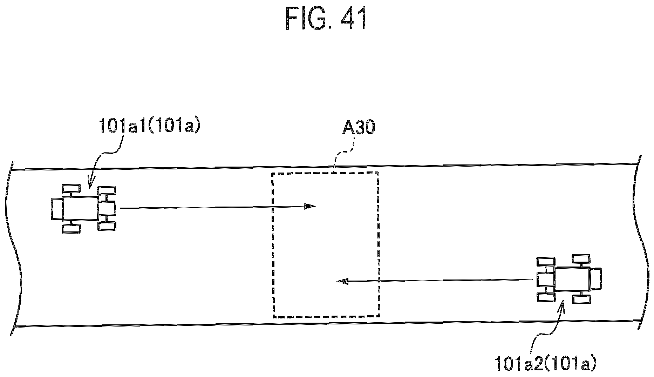

Fig. 41 illustrates a state in which the first tractor 101a1 and the second tractor 101a2 travel on the road (agricultural road). As shown in Fig. 41, each of the first tractor 101a1 and the second tractor 101a2 is controlled by the control device 60 and moves by the automated driving. For example, during the automated driving, the control device 60 of the first tractor 101a1 determines whether or not there is an exhausted package body 6. In a case where there is an exhausted package body 6, the communication device 45A of the first tractor 101a1 transmits a request signal to the second tractor 101a2. On the other hand, when the communication device 45A of the second tractor 101a2 receives the request signal during the automated driving, the control device 60 of the second tractor 101a2 determines whether or not there is a charged package body 6. In a case where there is a charged package body 6, the communication device 45A of the second tractor 101a2 transmits the handover signal to the first tractor 101a1. When the first tractor 101a1 receives the handover signal, the first tractor 101a1 and the second tractor 101a2 performs vehicle-to-vehicle communication via the communication device 45A to transmit the vehicle body positions to each other. The control device 60 of each of the first tractor 101a1 and the second tractor 101a2 computes a distance between the first tractor 101a1 and the second tractor 101a2 according to the vehicle body positions, and stops in, for example, an area A30 when the distance between the first tractor 101a1 and the second tractor 101a2 is equal to or smaller than a threshold (several meters or less. That is, the control device 60 of the first tractor 101a1 stops the automated driving in the area A30, and the control device 60 of the second tractor 101a2 also stops the automated driving. In the area A30, the charged package body 6 of the second tractor 101a2 and the exhausted battery body 6 of the first tractor 101a1 are exchanged.

Communication between the communication device 45A of the first tractor 101a1 and the communication device 45A of the second tractor 101a2 is not limited to direct communication or indirect communication. That is, transmission and reception of the handover signal and the request signal may be performed directly by the communication device 45A, or may be performed by a mobile phone communication network or the like of a base station or the like, satellite communication, or the like.

### <Summary>

The agricultural machine (tractor 101a) includes the prime mover 4, the plurality of package bodies 6 charged with the energy for driving at least one of the working device 3 and the prime mover 4, the vehicle body 3 loaded with at least the plurality of package bodies 6, and the control device 60 that controls traveling of the vehicle body 3, in which the control device 60 controls traveling for moving the vehicle body 3 toward another vehicle body 3 in a case where there is at least one package body 6 having energy equal to or more than the threshold among the plurality of package bodies 6.

The agricultural machine (tractor 101a) includes the prime mover 4, the plurality of package bodies 6 charged with the energy for driving at least one of the working device 3 and the prime mover 4, the vehicle body 3 loaded with at least the plurality of package bodies 6, and the communication device 45A, in which the communication device 45A transmits a signal indicating that the package body 6 can be delivered to another vehicle body 3 in a case where there is at least one package body 6 having the energy equal to or more than the threshold.

With this configuration, the package body 6 having the energy equal to or more than the threshold can be handed over (delivered) to another vehicle 3. That is, the another vehicle 3 can perform charging of the energy without moving to a predetermined place for replacing or charging the package body 3.

The agricultural machine (tractor 101a) includes the communication device 45A that transmits a signal indicating that the package body 6 can be delivered to another vehicle body 3 in a case where there is at least one package body 6 having the energy equal to or more than the threshold. With this configuration, the another vehicle 3 can easily grasp that the package body 6 having the energy equal to or more than the threshold is handed over.

In a case where the communication device 45 of the agricultural machine (tractor 101a) receives a request for bringing the package body 6 from another vehicle body 3, the control device 60 controls traveling for moving toward the another vehicle body 3. Accordingly, the another vehicle 3 can receive the package body 6 of the agricultural machine (tractor 101a) only by making a request.

The control device 60 extracts the charged package body 6 which is the package body 6 having the energy equal to or more than the threshold among the plurality of package bodies 6, and selects the charged package body 6 that can be delivered to another vehicle body 3 among the plurality of charged package bodies 6 in a case where there are a plurality of extracted charged package bodies 6. With this configuration, only the selected charged package body 6 among the plurality of charged package bodies 6 can be delivered to another vehicle 3.

The control device 60 stops the vehicle body 3 in a case where a distance between the vehicle body 3 and another vehicle body 3 becomes equal to or smaller than a threshold. With this configuration, the agricultural machine (tractor 101a) loaded with the package body 6 that has the energy equal to or more than the threshold and can be handed over to another vehicle 3 can be stopped at a position close to the another vehicle body 3, and the package body 6 can be easily replaced in the vicinity of the stop position.

It should be understood that the embodiments disclosed herein are illustrative in all respects and not restrictive. The scope of the present invention is indicated not by the above description but by the claims, and it is intended that meanings equivalent to the claims and all modifications within the scope are included.

### REFERENCE SIGNS LIST

- 1: TRACTOR
- 2: WORKING DEVICE
- 3: TRAVELING VEHICLE BODY (VEHICLE BODY)
- 4: PRIME MOVER
- 5: TRANSMISSION DEVICE
- 5a: PROPULSION SHAFT
- 5b: MAIN TRANSMISSION UNIT
- 5c: AUXILIARY TRANSMISSION UNIT
- 5d: SHUTTLE UNIT
- 5e: PTO POWER TRANSMISSION UNIT
- 5f: FRONT TRANSMISSION UNIT
- 6: PACKAGE BODY
- 6A: FIRST PACKAGE BODY
- 6B: SECOND PACKAGE BODY
- 6a1: HOLDER
- 6b1: GRIP PORTION
- 7: TRAVELING DEVICE
- 7F: FRONT WHEEL
- 7R: REAR WHEEL
- 8: LIFTING DEVICE
- 8a: LIFT ARM
- 8b: LOWER LINK
- 8c: TOP LINK
- 8d: LIFT ROD
- 8e: LIFT CYLINDER
- 9: CABIN
- 10: DRIVER SEAT
- 12: SHUTTLE SHAFT
- 13: FORWARD/BACKWARD SWITCHING UNIT
- 14: PTO PROPULSION SHAFT
- 15: PTO CLUTCH
- 16: PTO SHAFT
- 17: FIRST CLUTCH
- 18: SECOND CLUTCH
- 19: MOUNTING PORTION
- 19a: HOUSING PORTION
- 19b: OPENING
- 19c: LID PORTION
- 20F: FRONT WHEEL DIFFERENTIAL DEVICE
- 20R: REAR WHEEL DIFFERENTIAL DEVICE
- 21F: FRONT AXLE
- 21R: REAR AXLE
- 22: FRONT TRANSMISSION SHAFT
- 25: FIRST OPERATION VALVE
- 26: SECOND OPERATION VALVE
- 27: CONTROL VALVE
- 29: STEERING DEVICE
- 30: STEERING WHEEL
- 31: STEERING SHAFT
- 32: ASSIST MECHANISM
- 33: HYDRAULIC PUMP
- 34: CONTROL VALVE
- 35: STEERING CYLINDER
- 40A: POSITIONING DEVICE
- 41: RECEPTION DEVICE
- 42: INERTIAL MEASUREMENT UNIT
- 43a: SHUTTLE LEVER
- 43b: IGNITION SWITCH
- 43c: PTO SWITCH
- 43d: PTO SHIFT LEVER
- 43e: SHIFT CHANGEOVER SWITCH
- 43f: SHIFT LEVER
- 43g: ACCELERATOR LEVER
- 43h: HYDRAULIC LEVER
- 43i: DRIVING CHANGEOVER SWITCH
- 43j: MEASUREMENT SENSOR
- 43k: MEASUREMENT SENSOR
- 431: MEASUREMENT SENSOR
- 44: ALERT DEVICE
- 45A: COMMUNICATION DEVICE
- 45B: COMMUNICATION DEVICE
- 50: DISPLAY DEVICE
- 55: REGISTER BUTTON
- 60: CONTROL DEVICE
- 80: FARM FIELD INPUT SECTION
- 81: FARM FIELD DISPLAY SECTION
- 82: TURNING WIDTH INPUT SECTION
- 83: TURNING SETTING BUTTON
- 85: ROUTE DISPLAY SECTION
- 86: WIDTH INPUT SECTION
- 95: POINTER SECTION
- 100: MANAGEMENT DEVICE
- 101: AGRICULTURAL MACHINE
- 101a: TRACTOR
- 101b: IMPLEMENT
- 110: WORK CREATION UNIT
- 111: WORK STORAGE UNIT
- 120: EXTERNAL TERMINAL
- 120A: MANAGER TERMINAL
- 120B: WORKER TERMINAL
- 120C: DRIVER TERMINAL
- 120D: CENTER TERMINAL
- 130: OPERATION SWITCH
- 131: WORK SETTING SECTION
- 132: DATE SETTING SECTION
- 133: FARM FIELD SETTING SECTION
- 134: TIME SETTING SECTION
- 135: WORKER SETTING SECTION
- 136: MACHINE SETTING SECTION
- 137: SPREAD OBJECT SETTING SECTION
- 138: SPREAD AMOUNT SETTING SECTION
- 139: REGISTER BUTTON
- 140: PERIOD INPUT SECTION
- 141: INFORMATION DISPLAY SECTION
- A1: TURNING AREA
- A2: WORK AREA
- A3: UNIT WORK SECTION
- A5: RELAY POINT
- G1: SIDE
- G2: SIDE
- G3: SIDE
- G4: SIDE
- Gi: SIDE
- H1: FARM FIELD
- H10: CONTOUR
- H11: CONTOUR
- H2: STORAGE PLACE
- H3: DELIVERY CENTER (DELIVERY BASE)
- J1: AREA
- J2: AREA
- J3: AREA
- J4: AREA
- Ji: AREA
- K1: TRAVELING TRACK
- K2: CONTOUR
- K3: CONTOUR
- L1: SCHEDULED TRAVEL ROUTE
- L1a: STRAIGHT ROUTE
- L1b: TURNING ROUTE
- M1: SCREEN
- M10: SCREEN
- M11: SCREEN
- M12: SCREEN
- M15: SCREEN
- M30: SCREEN (TERMINAL SCREEN)
- M31: SCREEN
- MP1: MAP
- MP2: FARM FIELD MAP
- N1: IN-VEHICLE COMMUNICATION NETWORK
- P10: POINT
- PH: REPLENISHMENT POSITION (STANDBY POSITION)
- VP1: VEHICLE BODY POSITION
- W1: TURNING WIDTH
- W2: WORK WIDTH
- W3: OVERLAP WIDTH

## Claims

1. An energy support system for an agricultural machine to and from which a package body charged with energy is attachable and detachable and which is driven by the energy charged in the package body, the energy support system comprising:
a management device that computes an energy consumption of the agricultural machine in a case where the agricultural machine performs an agricultural work and computes a number of package bodies required for covering the energy consumption based on the energy consumption.

2. The energy support system for an agricultural machine according to claim 1, wherein
the management device transmits the number of package bodies and farm field information regarding a farm field that is a delivery destination of the package body to any one of a transport vehicle that transports the package body, a terminal of a driver who drives the transport vehicle, and a terminal of a delivery center for delivering the package body.

3. The energy support system for an agricultural machine according to claim 1 or 2, wherein
the management device computes the energy consumption of the agricultural machine in a case where the agricultural machine performs the agricultural work based on a content of the agricultural work performed in the farm field.

4. The energy support system for an agricultural machine according to claim 1, wherein
the management device computes the energy consumption of the agricultural machine in a case where the agricultural machine performs the agricultural work for each of a plurality of farm fields based on a content of the agricultural work of each of the plurality of farm fields, and computes the number of package bodies for each of the plurality of farm fields based on the computed energy consumption for each of the plurality of farm fields.

5. The energy support system for an agricultural machine according to claim 4, wherein
the management device searches for a farm field where the agricultural work is performed in a predetermined period among the plurality of farm fields, and extracts the farm field extracted by the search and the number of package bodies used in the extracted farm field.

6. The energy support system for an agricultural machine according to claim 5, wherein
the management device transmits the package body for each searched farm field and information regarding each farm field to any one of a transport vehicle that transports the package body, a terminal of a driver who drives the transport vehicle, and a terminal of a delivery center for delivering the package body.

7. The energy support system for an agricultural machine according to claim 1 or 2, wherein
the management device issues a delivery instruction for the package body to any one of a transport vehicle that transports the package body, a terminal of a driver who drives the transport vehicle, and a terminal of a delivery center for delivering the package body.

8. The energy support system for an agricultural machine according to claim 1 or 2, wherein
when the energy of the mounted package body becomes equal to or less than a threshold, the agricultural machine travels toward the package body delivered to an inside of the farm field or a vicinity of the farm field.

9. The energy support system according to claim 1 or 2, wherein
the management device issues a collection instruction for the package body to any one of the transport vehicle that transports the package body, the terminal of the driver who drives the transport vehicle, and the terminal of the delivery center for delivering the package body.

10. An energy support method for an agricultural machine to which a package body charged with energy is detachably attached, the energy support method comprising:
computing an energy consumption of the agricultural machine in a case where the agricultural machine performs agricultural work before the agricultural machine performs the agricultural work in a farm field; and computing a number of package bodies required for covering the energy consumption based on the energy consumption.

11. An energy support system for an agricultural machine to and from which a package body charged with energy is attachable and detachable and which is driven by the energy charged in the package body, the energy support system comprising:
a management device that acquires any one of a work plan of agricultural work performed by the agricultural machine in a farm field or a request from the agricultural machine, and issues a command for delivering the package body toward the farm field to any one of a transport vehicle, a terminal of a driver who drives the transport vehicle, and a terminal of a delivery center for delivering the package body according to a delivery plan set based on the work plan or the request.

12. The energy support system for an agricultural machine according to claim 11, wherein
the management device acquires any one of the work plan of the agricultural work performed by the agricultural machine in the farm field and the request from the agricultural machine, and issues a command for collecting the package body to any one of the transport vehicle, the terminal of the driver who drives the transport vehicle, and the terminal of the delivery center for delivering the package body according to a collection plan set based on the work plan or the request.

13. The energy support system for an agricultural machine according to claim 12, wherein
the agricultural machine includes an operation switch that makes at least one of a request for delivery of the package body and a request for collection of the package body.

14. The energy support system for an agricultural machine according to claim 12, wherein
the agricultural machine includes a communication device that makes at least any one of a request for delivery of the package body and a request for collection of the package body when the energy of the package body mounted on the agricultural machine becomes equal to or less than a threshold.

15. The energy support system for an agricultural machine according to any one of claims 11 to 14, wherein
the transport vehicle moves toward the farm field by automated driving in a case where the command for delivering the package body is received.

16. The energy support system for an agricultural machine according to any one of claims 11 to 14, wherein
the transport vehicle moves toward the farm field by automated driving in a case where the command for collecting the package body is received.

17. The energy support system for an agricultural machine according to any one of claims 11 to 14, wherein
the management device computes degradation of the package body from a delivery history of a plurality of package bodies stored in a delivery source, and selects the package body to be delivered from among the plurality of package bodies based on the computed degradation of the package body.

18. The energy support system for an agricultural machine according to any one of claims 11 to 14, wherein
the management device determines a delivery fee based on a size of the package body to be delivered.
